# EUROPEAN PATENT APPLICATION

(11) **EP 2 767 909 A1**
(43) Date of publication of application: **20.08.2014**
(21) Application number: 12854360.0
(22) Date of filing: 28.06.2012
(51) Int. Cl.: G06F 17/30, G06Q 30/02

(54) **INFORMATION PROCESSING DEVICE, INFORMATION PROCESSING METHOD, INFORMATION PROCESSING PROGRAM, AND RECORDING MEDIUM**

(30) Priority: 30.11.2011 JP 2011262037
(71) Applicant: Rakuten, Inc., Tokyo 140-0002 (JP)
(72) Inventor: MATSUDA Atsuyoshi, Tokyo 140-0002 (JP); KAWASAKI Fumihiro, Tokyo 140-0002 (JP)
(74) Representative: EIP
(86) International application number: PCT/JP2012/066538
(87) International publication number: WO 2013/080599

(57) **Abstract**

In selection of transaction objects, attribute fields regarded as important by a user are specified. An information processing apparatus includes: a first extracting means that extracts transaction objects whose transaction object information was browsed within a preset time, from browsing time of the transaction object information of the transaction objects registered in a list where the transaction objects selected by a user are registered, among the transaction objects whose transaction object information including attribute values of the transaction objects have been browsed to the user; a second extracting means that extracts transaction objects that have not been registered in the list among the transaction objects extracted by the first extracting means; and a specifying means that specifies attribute fields regarded as important by the user among a plurality of attribute fields of the transaction objects, based on attribute values differently set between transaction objects registered in the list and transaction objects extracted by the second extracting means.

## Description

### Technical Field

The present invention relates to the technical fields of specifying information useful for marketing of transaction objects, based on results of user's transaction object selection action.

### Background Art

In the past, there has been known a technique in which information on transaction objects selected by a user is registered, and transaction objects in which the user is interested are specified based on the registered information. As an example of the user' s transaction object selection action, there is an action of purchasing transaction objects, such as an action of purchasing items or an action of reserving services. Also, as an example of the selection action, there is an action of bookmarking transaction objects or registering transaction objects to a bookmark. When an interesting transaction object is specified, for example, the transaction for the specified transaction object is recommended to a user.

For example, Patent Literature 1 discloses an information retrieval system for specifying a content desired by a user, based on a purchase history. The information retrieval system generates a keyword vector of a customer profile by using book information and a customer's purchase history information. The keyword vector of the customer profile is constructed with a vector generated by combining keyword vectors of books purchased in the past by the customer on a category basis. The keyword vector is generated using a word, an author, and a category acquired from a book title and a content description. Then, the information retrieval system compares the keyword vector of the customer profile with the keyword vector of the book, and re-comments to the customer about books that are not probable to be purchased by the customer among the books having high similarity.

### Prior Art List

### Patent Literature

Patent Literature 1: JP 2001-265808 A

### Summary of the Invention

### Problem to be solved by the Invention

However, in the technique disclosed in Patent Literature 1, it is impossible to specify which field is regardedas important among a plurality of attribute fields of transaction objects and it is impossible to specify which transaction objects are selected by the user. In the technique disclosed in Patent Literature 1, it is impossible to specify transaction objects that are probable to be desired by the user. Also, for example, transaction objects of which the category is the same as the category of transaction objects purchased in the past by the user may be specified as transaction obj ects desired by the user. However, a plurality of attribute fields exists in each of the transaction objects belonging to the same category, and there are attribute values in each attribute field. Therefore, even when the category is specified, it can be said that the attribute fields regarded as important by the user can be specified.

The present invention has been made in view of the above points and is directed to provide an information processing apparatus, an information processing method, an information processing program, and a recording medium, which can specify attribute fields regarded as important by the user in selection of transaction objects.

### Means for solving the Problem

In order to solve the above problem, the invention according to claim 1 is an information processing apparatus comprising:
a first extracting means that extracts transaction objects whose transaction object information was browsed within a preset time, from browsing time of the transaction object information of the transaction objects registered in a list where the transaction objects selected by a user are registered, among the transaction objects whose transaction object information including attribute values of the transaction objects have been browsed to the user;
a second extracting means that extracts transaction objects that have not been registered in the list among the transaction objects extracted by the first extracting means; and
a specifying means that specifies attribute fields regarded as important by the user among a plurality of attribute fields of the transaction objects, based on attribute values differently set between transaction objects registered in the list and transaction objects extracted by the second extracting means.

For example, in the electronic commerce, attribute information of transaction objects is provided to a user. The user selects transaction objects, based on the provided information. Generally, a plurality of attributes of the transaction object exits. Therefore, the information provided to the user as the attribute information is, for example, a combination of an attribute field name and an attribute value. For example, when the transaction obj ect is an item, the attribute field of the item may be a price, a shipping cost of the item, a delivery method, number of stocks, a specification of the item, and a content of the item or the like. The user can determine whether to select transaction objects based on the attribute value with respect to attribute field.

Even among a plurality of transaction objects belonging to the same category, various transaction objects exist. Therefore, transaction obj ects selected by the user are changed. This is because attribute fields regarded as important by the user are different. For example, a user may regard a price as important, or a user may regard a specific specification as important. It is likely that which attribute field is regarded as important by a certain user is important information in marketing of transaction objects.

According to this invention, transaction obj ects that have not been selected are extracted among transaction objects of which the information has been browsed within a preset time from the browsing date and time of information of the transaction obj ect selected by the user. Thus, the attribute fields regarded as important by the user are specified based on attribute values differently set between transaction obj ects selected by the user and the extracted transaction objects. A plurality of transaction objects of which the information have been browsed at the similar period is probable to be transaction objects of which the information has been browsed by the user with an emphasis on the same attribute field. Thus, since attribute values of attribute fields regarded as important by the user are different, it is considered that a certain transaction object among a plurality of transaction objects is selected by the user, or a certain transaction object is not selected. Therefore, in selection of transaction objects, attribute fields regarded as important by a user can be specified.

The invention according to claim 2 is the information processing apparatus according to claim 1,
wherein the specifying means specifies attribute fields whose attribute values more advantageous to the user are set to the transaction objects registered in the list than the transaction objects extracted by the second extracting means, as the attribute fields regarded as important by the user, among the attribute fields whose attribute values are set to both of the transaction objects registered in the list and the transaction objects extracted by the second extracting means.

According to this invention, when an attribute value of a transaction object selected by the user is more advantageous to the user than an attribute value of a transaction object excluded from the selection target, the attribute field is specified as an attribute field regarded as important by the user. This is because the user selects the transaction object of which the attribute value is advantageous to the user himself or herself.

The invention according to claim 3 is the information processing apparatus according to claim 1,
wherein a specifying means specifies attribute fields whose attribute values are set to be advantageous to the user, as the attribute fields regarded as important by the user, among the attribute fields whose attribute values are set to only the transaction objects registered in the list among the transaction objects registered in the list and the transaction objects extracted by the second extracting means.

According to this invention, in a certain attribute field, when the attribute value is not set in the transaction object excluded from the selection target while the attribute value determined as advantageous to the user is set to the selected transaction object, it can be determined that the corresponding attribute field is regarded as important by the user. This is because the user selects the transaction object of which the attribute value is known as advantageous rather than the transaction object of which the attribute value is not known.

The invention according to claim 4 is the information processing apparatus according to any one of claims 1 to 3, further comprising:
a determining means that determines candidates of the attribute fields regarded as important by the user, based on classes to which the transaction objects registered in the list belong among a plurality of classes of the transaction objects,
wherein the specifying means specifies the attribute fields regarded as important by the user, among the candidates determined by the determining means.

According to this invention, the user can appropriately specify the attribute fields regarded as important by the user, even when the attribute fields tending to be regarded as important by the user are different according to the class of the transaction object.

The invention according to claim 5 is the information processing apparatus according to any one of claims 1 to 4,
wherein one of the first extracting means and the second extracting means extracts the transaction objects for which a retrieval condition stored in a browsing information storing means is the same as a retrieval condition stored in a list information storing means,
the browsing information storing means storing, in association with each other, information indicating the transaction objects whose transaction object information was browsed, and a retrieval condition designated by the user so as to retrieve the transaction objects, and
the list information storingmeans storing, in association with each other, information indicating the transaction objects registered in the list, and information designated by the user so as to retrieve the transaction objects.

According to this invention, it is possible to increase the extraction accuracy of transaction objects that have not been selected by the user. This is because the transaction objects having the same retrieval condition are highly probable to be transaction objects of which the information has been browsed by the user with an emphasis on the same attribute field. Therefore, it is possible to increase the specifying accuracy of attribute fields regarded as important by the user.

The invention according to claim 6 is the information processing apparatus according to any one of claims 1 to 5, further comprising:
a selecting means that selects transaction objects to be recommended to the user for transaction, based on the attribute values of the attribute fields specified by the specifying means; and
a providing means that provides information on the transaction objects selected by the selecting means.

According to this invention, since the transaction objects recommended to the user for transaction are selected based on the attribute value of the attribute field regarded as important by the user, it is possible to provide the user with the information of transaction objects that are highly probable that the user will be interested in that item.

The invention according to claim 7 is an information processing method, which is performed by an information processing apparatus, the information processing method comprising:
a first extracting step of extracting transaction objects whose transaction object information was browsed within a preset time, from browsing time of the transaction object information of the transaction objects registered in a list where the transaction objects selected by a user are registered, among the transaction objects whose transaction object information including attribute values of the transaction objects have been browsed to the user;
a second extracting step of extracting transaction obj ects that have not been registered in the list among the transaction objects extracted in the first extracting step; and
a specifying step of specifying attribute fields regarded as important by the user among a plurality of attribute fields of the transaction obj ects, based on attribute values differently set between transaction objects registered in the list and transaction objects extracted in the second extracting step.

The invention according to claim 8 is an information processing program, which causes a computer included in an information processing apparatus to function as:
a first extracting means that extracts transaction objects whose transaction object information was browsed within a preset time, from browsing time of the transaction object information of the transaction objects registered in a list where the transaction objects selected by a user are registered, among the transaction objects whose transaction object information including attribute values of the transaction objects have been browsed to the user;
a second extracting means that extracts transaction objects that have not been registered in the list among the transaction objects extracted by the first extracting means; and
a specifying means that specifies attribute fields regarded as important by the user among a plurality of attribute fields of the transaction objects, based on attribute values differently set between transaction objects registered in the list and transaction objects extracted by the second extracting means.

The invention according to claim 9 is a recording medium storing thereon a computer-readable information processing program, which causes a computer included in an information processing apparatus to function as:
a first extracting means that extracts transaction objects whose transaction obj ect information was browsed within a preset time, from browsing time of the transaction object information of the transaction objects registered in a list where the transaction objects selected by a user are registered, among the transaction objects whose the transaction object information including attribute values of the transaction objects have been browsed to the user;
a second extracting means that extracts transaction objects that have not been registered in the list among the transaction objects extracted by the first extracting means; and
a specifying means that specifies attribute fields regarded as important by the user among a plurality of attribute fields of the transaction objects, based on attribute values differently set between transaction objects registered in the list and transaction objects extracted by the second extracting means.

### Advantageous Effects of the Invention

According to the present invention, transaction objects that have not been selected are extracted among transaction objects of which the information has been browsed within a preset time from the browsing date and time of information of the transaction object selected by the user. Thus, the attribute fields regarded as important by the user are specified based on attribute values differently set between transaction objects selected by the user and the extracted transaction objects. A plurality of transaction objects of which the information have been browsed at the similar period is probable to be transaction objects of which the information has been browsed by the user with an emphasis on the same attribute field. Thus, since attribute values of attribute fields regarded as important by the user are different, it is considered that a certain transaction object among a plurality of transaction objects is selected by the user, or a certain transaction object is not selected. Therefore, in selection of transaction objects, attribute fields regarded as important by the user can be specified.

### Brief Description of the Drawings

Fig. 1 is a diagram illustrating an example of a schematic configuration of an information providing system S according to an embodiment.
Fig. 2 is a diagram illustrating an example of contents of an attribute value of each of a selected item and a comparative item.
Fig. 3 is a block diagram illustrating an example of a schematic configuration of an online mall server 1 according to an embodiment.

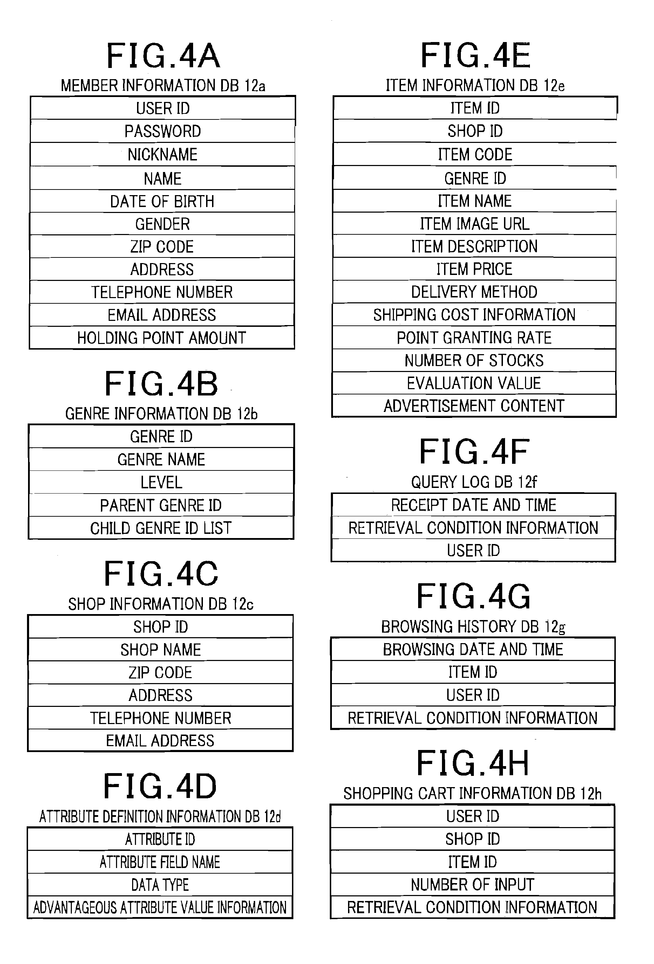

Fig. 4A is a diagram illustrating an example of contents registered in a member ship information DB 12a, Fig. 4B is a diagram illustrating an example of contents registered in a genre information DB 12b, Fig. 4C is a diagram illustrating an example of contents registered in a shop information DB 12c, Fig. 4D is a diagram illustrating an example of contents registered in an attribute definition DB 12d, Fig. 4E is a diagram illustrating an example of contents registered in an item information DB 12e, Fig. 4F is a diagram illustrating an example of contents registered in a query log DB 12f, Fig. 4G is a diagram illustrating an example of contents registered in a browsing history DB 12g, and Fig. 4H is a diagram illustrating an example of contents registered in a shopping cart information DB 12h according to an embodiment.
Fig. 5A is a diagram illustrating an example of contents registered in a purchase history DB 12i, Fig. 5B is a diagram illustrating an example of contents registered in a bookmark information DB 12j, and Fig. 5C is a diagram illustrating an example of contents registered in an importance field information DB 12k.
Fig. 6 is a flowchart illustrating a processing example of a one-user importance attribute field specifying process of a system control unit 14 of the online mall server 1 according to an embodiment.
Fig. 7 is a flowchart illustrating a processing example of an importance degree calculation process of the system control unit 14 of the online mall server 1 according to an embodiment.
Fig. 8 is a flowchart illustrating a processing example of a web page request reception process of the system control unit 14 of the online mall server 1 according to an embodiment.
Fig. 9A is a diagram illustrating an example of contents of an option attribute value of each of a selected item and a comparative item. Fig. 9B is a diagram illustrating an example of contents registered in the item information DB 12e.
Fig. 10 is a flowchart illustrating a processing example of an importance degree calculation process of the system control unit 14 of the online mall server 1 according to an embodiment.
Fig. 11A is a diagram illustrating an example of contents of an attribute value of a specific field of each of a selected item and a comparative item, Fig. 11B is a diagram illustrating an example of contents registered in the item information DB 12e, and Fig. 11C is a diagram illustrating an example of contents registered in a genre attribute definition information DB 121.
Fig. 12 is a flowchart illustrating a processing example of an importance degree calculation process of the system control unit 14 of the online mall server 1 according to an embodiment.

### Mode for carrying out the Invention

Hereinafter, embodiments of the present invention will be described in detail with reference to the drawings. Also, embodiments described below are embodiments in a case where the present invention is applied to an information providing system.

### [1. First Embodiment]

### [1-1. Overview of Configuration and Function of Information Providing System]

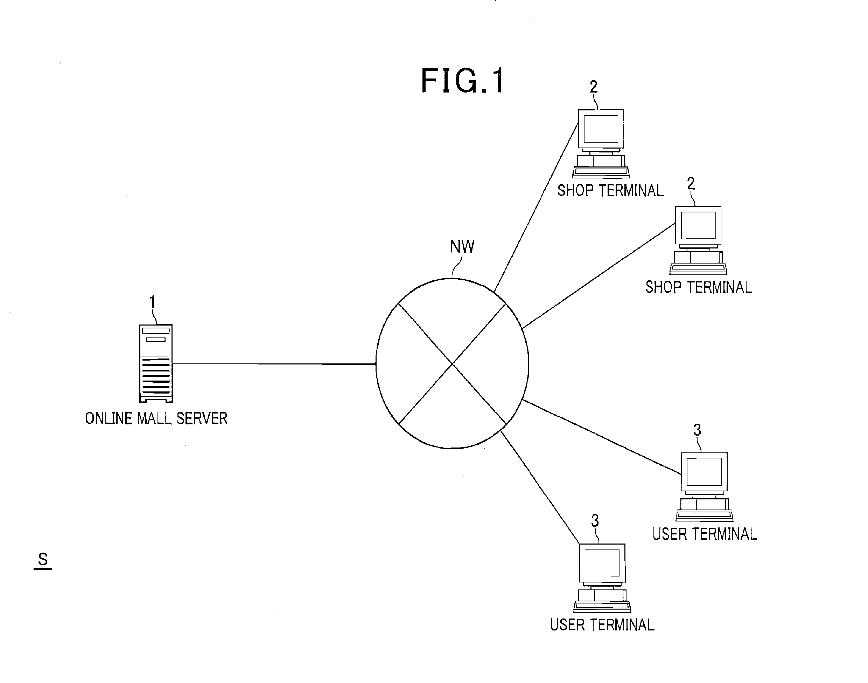

First, the configuration of the information providing system S according to the present embodiment will be described with reference to Fig. 1. Fig. 1 is a diagram illustrating an example of a schematic configuration of an information providing system S according to the present embodiment.

As illustrated in Fig. 1, the information providing system S is configured to include an online mall server 1, a plurality of shop terminals 2, and a plurality of user terminals 3. Moreover, the online mall server 1, and the respective shop terminals 2 and the respective user terminals 3 can mutually transmit and receive data through a network NW by using, for example, TCP/IP or the like as a communication protocol. Also, the network NW is constructed by, for example, Internet, a dedicated communication line (for example, community antenna television (CATV) line), a mobile communication network (including a base station and the like), a gateway, or the like.

The onlinemall server 1 is a server apparatus that executes various processes associated with an online mall where users can purchase items. The online mall server 1 is an example of an information processing apparatus of the present invention. Users can purchase desired items from desired shops by using the online mall. The online mall server 1 transmits a web page of an online mall and performs processes associated with retrieval, purchase, and the like of items, for example, in response to a request from the user terminal 3. Also, an item is an example of a transaction object in the present invention.

The shop terminal 2 is a terminal device that is used by an employee or the like of a shop opened in an online mall. The shop terminal 2 accesses a server apparatus of the online mall server 1 or the like, based on an operation from an employee or the like. Therefore, the shop terminal 2 displays a web page received from the server apparatus. Software such as a browser or an email client is incorporated into the shop terminal 2. The employee uses the shop terminal 2 to, for example, register information on items for sales in the online mall and confirm contents of ordered items.

The user terminal 3 is a terminal device of a user who uses the online mall. The user terminal 3 accesses the online mall server 1 based on an operation from the user, and displays a web page received from the online mall server 1. Software such as a browser or an email client is incorporated into the user terminal 3. As an example of the user terminal 3, a personal computer, a personal digital assistant (PDA), a mobile information terminal such as a smartphone, a mobile phone or the like is used.

The user can designate a retrieval condition so as to retrieve items being purchase candidates in the online mall. As an example of the retrieval condition, a keyword, an item genre, and the like can be designated. The retrieval condition can be designated in, for example, a top page or the like. The top page is a web page located at the top of the online mall. When the retrieval condition is designated, the online mall server 1 retrieves items satisfying the retrieval condition. Specifically, the online mall server 1 retrieves items including the designated keyword in the item name or the item description. Also, the online mall server 1 retrieves items belonging to the designated genre. When a plurality of retrieval conditions is designated, the online mall server 1 retrieves, for example, items satisfying all the retrieval condition. Then, a retrieval result page is displayed on a screen of the user terminal 3.

The retrieval result page is a web page on which a list of retrieved items is displayed. For example, in the retrieval result page, an item name, an item image, an item price, a shop name, and the like are displayed for each item. Also, in the retrieval result page, a hyperlink (hereinafter, referred to as "link") of an item page of the retrieved item is embedded. In the retrieval result page, when the user selects a link of an arbitrary item, a corresponding item page is displayed on the screen of the user terminal 3. The item page is a web page in which detailed information on one item is displayed. The item page is an example of transaction object information in the present invention.

In the online mall, a bookmark function is provided. The bookmark function is a function of registering an item sold in an online mall as a bookmark of a user to store a reference to an item page in a user-dedicated list so that the user can easily browse the item page of the bookmarked item. In the online mall, a link displayed as "add to bookmark" is displayed in the item page. When a user selects this link, an item of which the information is displayed in the item page is registered in the bookmark of the user.

The user can check the items registered in the bookmark in a bookmark page. The bookmark page is a web page in which a list of items registered in the bookmark is displayed and is a dedicated web page of each user. Moreover, a link to an item page of an item registered in the bookmark is embedded in the bookmark page. When the user selects a link to an arbitrary item in the bookmark page, it is possible to display the corresponding item page. Moreover, in the bookmark page, the user can delete unnecessary items from the bookmark among the items registered in the bookmark.

Also, in the item page, a shopping cart input button is displayed. When the user selects the shopping cart input button, an item of which the information is displayed in the item page is input into the shopping cart. The shopping cart in the online mall is a virtual container where items selected by the user are put as purchase candidates. Also, when the shopping cart input button is selected, a shopping cart page is displayed on the screen of the user terminal 3. The shopping cart page is a web page where a list of items input in the shopping cart is displayed. Also, in the shopping cart page, a link to the item page of the item input in the shopping cart page is embedded. When the user selects a link to an arbitrary item in the shopping cart page, it is possible to display the corresponding item page. Also, in the shopping cart page, the user can exclude unnecessary items from the shopping cart among items registered in the bookmark. Also, when the user selects a button for proceeding with an order procedure in the shopping cart page, a procedure of purchasing listed items can be performed. The purchased item is eliminated from the shopping cart.

The item purchase action of the user is recorded as a purchase history. The user can confirm his or her own purchase history in a purchase history page. The purchase history page is a web page that displays a list of purchase history. Also, in the purchase history page, a link to an item page of the purchased item is embedded. When the user selects a link to an arbitrary item in the purchase history page, it is possible to display the corresponding item page.

### [1-2. Specifying of Attribute Field Regarded as Important by User]

### [1-2-1. Attribute of Item]

Each item has a plurality of attributes. Examples of the attribute field of the item include an item name, a shop of a distribution source, an item code, a genre, a price, a shipping cost, and number of stocks. Also, each attribute of the item has an attribute value applied to the attribute field. The attribute value is information indicating contents of the attribute. For example, the attribute value of each item is a character string indicating an item name or the like. Also, for example, the attribute value of the item price is a numerical value indicating an amount of money. The user can confirm each attribute value of the item in the item page.

### [1-2-2. Selection of Item]

When the user selects an item in the online mall, it is considered that the user will select the item based on the attribute of the item. For example, the user may select an item among a plurality of items by comparing attributes of the plurality of items. Alternatively, the user may select an item having a desired attribute value among the plurality of items. When the user selects an item, attribute fields regarded as important by the user may be different for each user. The attribute field regarded as important by the user is, for example, an attribute field that is a determination material of selection of an item by the user. For example, there is a case where a certain user regards the price as important. Also, there is a case where another user does not regard the price as important, but regards the presence or absence of current stock as important. There is a case where which attribute field is regarded as important by each user is important information in promoting the sales of items. For example, if the attribute field regarded as important is known, the attribute value can recommend to the user the purchase of the item considered as desired by the user in the attribute field. That is, an item suitable for each user can be recommended to the user. Thus, the online mall server 1 specifies the attribute field regarded as important by each user.

In order to specify the attribute field regarded as important by the user, the online mall server 1 specifies an item selected by the user, and an item unselected by the user. Alternatively, the online mall server 1 specifies an item currently selected by the user, and an item currently unselected by the user. The item selected by the user or the item currently selected by the user is referred to as "selected item". On the other hand, the item unselected by the user or the item currently unselected by the user is referred to as "comparative item". A representative example of the item selection action by the user is a purchase of an item. Also, examples of the item selection action include registration of an item to the bookmark and input of an item to the shopping cart. Each of the purchase history, the bookmark, and the shopping cart is an example of the list in the present invention.

### (1) Bookmark

For example, the user may register a favorite item, an item being a purchase candidate, and the like among a plurality of items in the bookmark, based on an item attribute. The selected item in the bookmark is an item currently registered in the bookmark. On the other hand, the comparative item in the bookmark is extracted from items that are not currently registered in the bookmark. Therefore, the comparative item in the bookmark includes an item that has not been registered in the bookmark, and an item that has been registered in the bookmark but is currently deleted from the bookmark. The item deleted from the bookmark is an item in which the user loses interest, an item that is no longer the purchase candidate, and the like.

Also, the purchased item may be deleted from the bookmark. In this case, the purchased item may become a comparative item in relation to the bookmark, but is a selected item in relation to the purchase.

### (2) Shopping Cart

For example, the user may put an item determined to purchase, an item to be purchased, and the like in the bookmark among a plurality of items, based on an item attribute. The selected item in the shopping cart is an item currently put in the shopping cart. On the other hand, the comparative item in the shopping cart is extracted among items that are not currently put in the shopping cart. Therefore, the comparative item in the shopping cart includes an item that has not been put in the shopping cart, an item that has been put in the shopping cart but is currently excluded from the shopping cart. The purchased item may become a comparative item in relation to the shopping cart, but is a selected item in relation to the purchase.

### (3) Purchase

The user selects an item to be purchased among a plurality of items, based on an item attribute. The selected item in the purchase is an item that has been purchased by the user. On the other hand, the comparative item in the purchase is extracted from items that have been purchased by the user.

### [1-2-3. Specifying Method]

As described above, the online mall server 1 specifies the selected item and the comparative item. Specifying the selected item and the comparative item, and specifying the attribute field regarded as important by the user are separately performed in each of the bookmark, the shopping cart, and the purchase. This is because the selection of the item is performed in separate viewpoint. Specifically, the online mall server 1 specifies a selected item based on bookmark information, shopping cart information, or purchase history. Subsequently, the online mall server 1 extracts an item of which the item page has been browsed by the user within a comparative item extraction time preset before and after, from browsing date and time of the item page of the item selected by the user. The plurality of items of which the item pages have been browsed at the similar period is probable to be items of which the information has been browsed by the user with an emphasis on the same attribute field. Subsequently, the online mall server 1 extracts items being not the selected item from the extracted items. The item extracted at this time is the comparative item.

When specifying the selected item and the comparative item, the online mall server 1 specifies a field regarded as important by the user, based on attribute values differently set between the selected item and the comparative item. In the present embodiment, the attribute value of each of the selected item and the comparative item is set in each attribute field. Therefore, the online mall server 1 compares the attribute value of the selected item with the attribute value of the comparative item. When the set contents of the attribute values are different, the attribute value of the selected item does not coincide with the attribute value of the comparative item. As the comparison result, the online mall server 1 specifies the attribute field in which the attribute value of the selected item is more advantageous to the user than the attribute value of the comparative item, as the attribute field regarded as important by the user. This is because the user selects the item of which the attribute value of the field regarded as important by the user himself or herself is more advantageous. Therefore, in the present embodiment, the attribute field of which the attribute value is to be compared is an attribute field of which the advantage or disadvantage can be determined based on the attribute value.

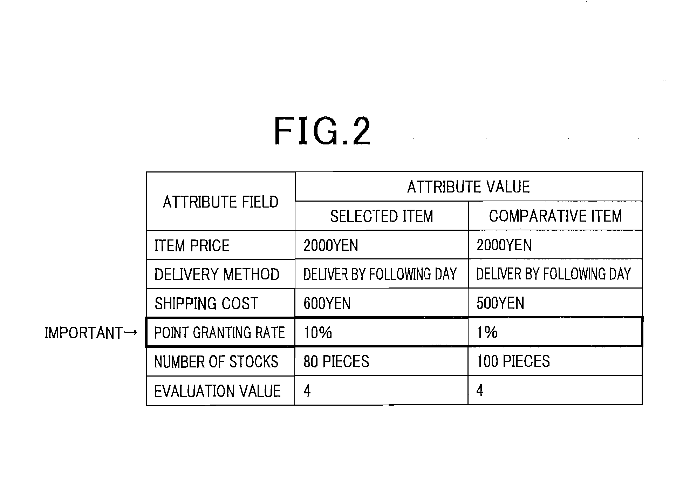

Fig. 2 is a diagram illustrating an example of contents of an attribute value of each of the selected item and the comparative item. In each item, an attribute value is set to each attribute field of an item price, a delivery method, a shipping cost, a point granting rate, number of stocks, and an evaluation value. An item of which the price is lower is an itemmore advantageous to the user. As an example of the delivery method, there are a general delivery method and a delivery method that always delivers an item by the day following the day on which the item is ordered. The delivery method that always delivers the item by the following day is more advantageous to the user than the general delivery method. Also, the lower shipping cost is advantageous to the user. The point granting rate is a rate of the number of points granted to the user with respect to the item price when the user purchases the item. The points have the equivalent value as money and can be spent for payment when the user purchases an item in the online mall. A higher point granting rate is more advantageous to the user. A larger number of stocks are more advantageous to the user. The evaluation value is a value indicating the height of the evaluation set to the item by the user. The user can register a review for items and set an evaluation value. The evaluation value as the attribute value of the item is an average of evaluation values set by each value. A higher evaluation value is more advantageous to the user. Also, a total purchase cost obtained by summing the itemprice and the shipping cost is also an attribute field capable of determining whether a corresponding item is an advantageous item. A lower total purchase cost is more advantageous to the user.

In the example of Fig. 2, the shipping cost of the selected item is higher than the shipping cost of the comparative item. Also, the number of stocks of the selected item is smaller than the number of stocks of the comparative item. That is, the attribute values of the shipping cost and the number of stocks are more advantageous in the comparative itemthan in the selected item. Therefore, the shipping cost and the number of stocks are considered as attribute fields that are not regarded as important by the user.

Also, the item price, the delivery method, and the evaluation value are mutually identical between the selected item and the comparative item. That is, in the attribute values of the item price, the delivery method, and the evaluation value, the selected item is neither advantageous nor disadvantageous with respect to the comparative item. In this case, the item price, the delivery method, and the evaluation value are not determined as the attribute fields regarded as important by the user.

The point granting rate of the selected item is higher than the point granting rate of the comparative item. That is, in the attribute value of the point granting rate, the selected item is more advantageous than in the comparative item. Therefore, the point granting rate is specified as the attribute field that is regarded as important by the user. Also, the item price, the shipping cost, and the point granting rate of the selected item are 2000 yen, 600 yen, and 10%, respectively. Therefore, the number of points granted to the user having purchased the selected item is 200 points. Also, the item price, the shipping cost, and the point granting rate of the comparative item are 2000 yen, 500 yen, and 1%, respectively. Therefore, the number of points granted to the user having purchased the comparative item is 20 points. By converting 1 point into 1 yen, the balance of payment of the user is calculated when the user purchases an item. In the case of the selected item, 2000 yen + 600 yen - 200 yen = 2400 yen is paid. On the other hand, in the case of the comparative item, 2000 yen + 500 yen - 20 yen = 2480 yen is paid. Therefore, the selected item is more advantageous to the user than the comparative item.

However, there is a case where a plurality of comparative items is specified with respect to one selected item. In this case, in a certain attribute field, an attribute value of a selected item is more advantageous than an attribute value of a certain comparative item, but the attribute value of the selected item may not be more advantageous than an attribute value of another comparative item. In this case, the online mall server 1 may, for example, perform comparison with attribute values of all comparative items and specify the attribute fields in which the attribute value of the selected item is more advantageous, as the attribute fields regarded as important by the user. Also, for example, the online mall server 1 may calculate a ratio of the number of comparative items in which the attribute value of the selected item is more advantageous, with respect to the total number of comparative items, in each attribute field. This ratio is referred to as "importance degree". Thus, the online mall server 1 may specify the attribute field of which the importance degree is high, as the attribute field regarded as important by the user. Also, the online mall server 1 may determine the ranking of each attribute field in descending order of the importance degree. Thus, the online mall server 1 may specify the attribute fields of which the importance degree is ranking No. 1 to a preset ranking, as the attribute fields regarded as important by the user. Also, the online mall server 1 may specify all attribute fields of which the importance degree is higher than a preset threshold value, as the attribute fields regarded as important by the user.

Also, when specifying the comparative item, the online mall server 1 may specify only items having the same genre as the selected item, as the comparative items, among items of which the item pages have been browsed within a comparative item extraction time. This is because it is less likely that the user will perform selection by comparing the attribute among a plurality of items belonging to genres having on association with each other. Also, this is because, when genres are different, the range of the attribute value may be completely different, depending on the attribute field. For example, mineral water and personal computer are completely different in the price range.

Also, among items of which the item pages have been browsed within the comparative item extraction time, the online mall server 1 may specify only items retrieved under the same retrieval condition as the retrieval condition designated by the user when retrieving the selected items, as the comparative items. The same retrieval condition is the same viewpoint of retrieval by the user. Therefore, it is highly likely that the user will browse item information of the plurality of items of which the retrieval condition is identical, while putting emphasis on the mutually identical attribute field, as compared with the case where the item pages have been just browsed in the same period.

### [1-3. Configuration of Online Mall Server]

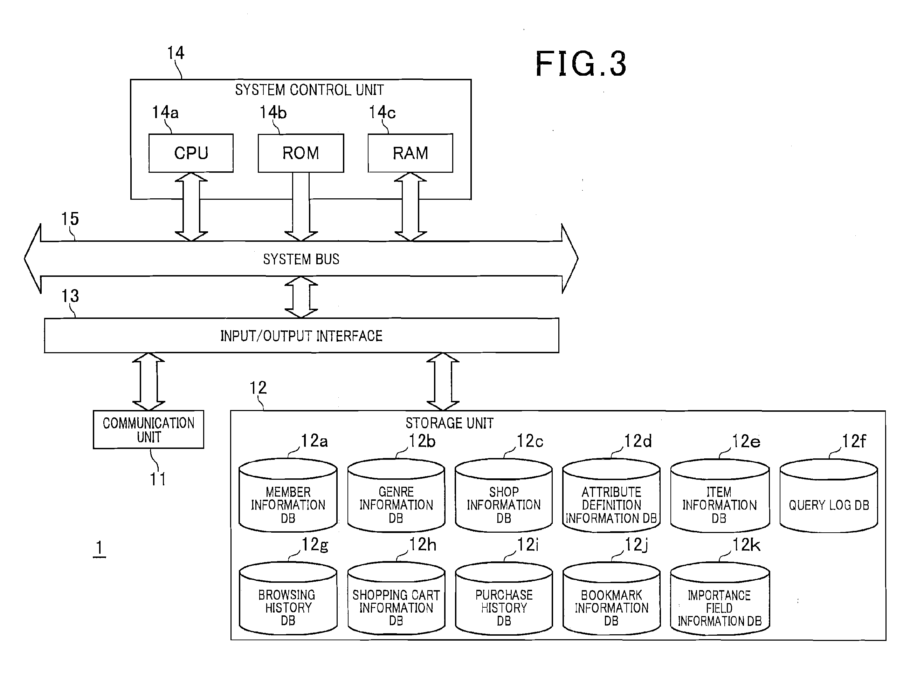

Next, the configuration of the online mall server 1 will be described with reference to Fig. 3 to Fig. 5.

Fig. 3 is a block diagram illustrating an example of a schematic configuration of the online mall server 1 according to the present embodiment. As illustrated in Fig. 3, the online mall server 1 includes a communication unit 11, a storage unit 12, an input/output interface 13, and a system control unit 14. The system control unit 14 and the input/output interface 13 are connected through a system bus 15.

The communication unit 11 is connected to a network NW to control communication states of the shop terminals 2, the user terminals 3, and the like.

The storage unit 12 is configured by, for example, a hard disk drive or the like. The storage unit 12 is an example of a browsing information storing means and a list information storing means in the present invention. Databases such as a membership information DB 12a, a genre information DB 12b, a shop information DB 12c, an attribute definition information DB 12d, an item information DB 12e, a query log DB 12f, a browsing history DB 12g, a shopping cart information DB 12h, a purchase history DB 12i, a bookmark information DB 12j, an importance field information DB 12k, are constructed in the storage unit 12. The term "DB" is an abbreviation for database.

Fig. 4A is a diagram illustrating an example of contents registered in the member information DB 12a. In the membership information DB 12a, membership information of users registered in the information providing system S as members is registered. Specifically, attributes of a user such as a user ID, a password, a nickname, a name, a date of birth, a gender, a zip code, an address, a telephone number, an email address, and a held point number are registered in the membership information DB 12a in association with each user. The user ID is identification information of a user. The held point number is the number of points held by a user.

Fig. 4B is a diagram illustrating an example of contents registered in the genre information DB 12b. Genre information on the genre of an item is registered in the genre information DB 12b. Specifically, attributes of a genre such as a genre ID, a genre name, a genre level, a parent genre ID, and a child genre ID list are registered in the genre information DB 12b in association with each genre. The genre information is set by, for example, an administrator or the like of an online mall.

Genres of items are defined hierarchically by a tree structure. Specifically, each node of a tree structure corresponds to a genre. The depth of a node corresponds to the level (hierarchy) of the genre corresponding to the node. The depth of a node is a distance from a node (hereinafter referred to as a "root node") positioned at the root. As the level value is larger, the level depth becomes deeper, and as the level value is smaller, the level depth becomes shallower. A genre corresponding to a child node of the root node is a genre of level 1. The genre of level 1 is the highest genre. A genre corresponding to a child node among the genres of level 1 is defined as a genre of level 2. Herein, a genre C2 corresponding to a child node of a certain genre C1 is referred to as a "child genre" of the genre C1. A child genre is also referred to as a sub-genre. Moreover, the genre C1 is referred to a "parent genre" of the genre C2. The child genre is a range to which the same items belong when the parent genre is further classified into a plurality of genres. Thus, the child genre belongs to a parent genre.

The genre ID is identification information of a genre defined by genre information. A parent genre ID is a genre ID of a parent genre of a genre defined by genre information. A child genre ID list is a list of genre IDs of child genres of a genre defined by genre information. The child genre ID list is set when the genre defined by the genre information includes child genres.

Fig. 4C is a diagram illustrating an example of contents registered in the shop information DB 12c. In the shop information DB 12c, shop information on a shop that is open at an online mall is registered. Specifically, attributes of a shop such as a shop ID, a shop name, a zip code, an address, a telephone number, and an email address, are registered in the shop information DB 12c in association with each shop. The shop ID is identification information of a shop.

Fig. 4D is a diagram illustrating an example of contents registered in the attribute definition information DB 12d. In the attribute definition information DB 12d, attribute definition information indicating the definitions of item attributes is registered. Attribute fields of which the attribute definition information is registered are attribute fields being candidates of attribute fields regarded as important by the user. Specifically, an attribute ID, an attribute field name, a data type, and advantage attribute value information or the like are registered in the attribute definition information DB 12d with respect to each attribute field. The attribute definition information is set by, for example, an administrator or the like of an online mall. Attribute fields being the candidates of the attribute fields regarded as important by the user are referred to as "candidate fields".

The attribute ID is identification information of the attribute field. The attribute field name is the name of the attribute field. The data type is a data type of an attribute value. Examples of the data type include an integer type, a fixed point type, a floating point type, an enumeration type, a boolean type, and a character string type. For example, a data type of an item price is an integer type. Also, for example, a data type of a delivery method is an enumeration type. The advantage attribute value information is information indicating which attribute value is advantageous to the user. For example, when the data type of the attribute value is a numeric data type, one of information indicating that a higher value is more advantageous, and information indicating that a lower value is more advantageous is set in the advantage attribute value information. Examples of the numerical data type include an integer type, a fixed point type, and a floating point type. Also, when the data type of the attribute value is not the numeric data type, information indicating an order advantageous to the user is set in the advantage attribute value information. For example, as the attribute value of the delivery method, the general delivery is represented by a value of 1, and the method of delivering by the following day is represented by a value of 2. In this case, information indicating that a higher attribute value is more advantageous is set in the advantage attribute value information. Also, when only two types exist as the settable attribute values, the attribute value of the advantageous side is set in the advantage attribute value information. For example, 2 is set in the advantage attribute value information of the delivery method.

Fig. 4E is a diagram illustrating an example of contents registered in the item information DB 12e. In the item information DB 12e, item information on items sold in an online mall is registered. Specifically, in the item information DB 12e, attribute values of an item such as an item ID, a shop ID, an item code, a genre ID, an item name, a uniform resource locator (URL) of an item image, an item description, an item price, a delivery method, shipping cost information, a point granting rate, number of stocks, an evaluation value, and an advertisement content are registered in association with each item. Each attribute value set in the item information is information to be displayed in the item page. Regarding a part of attribute values, information corresponding to the attribute value is displayed in the item page. For example, an image corresponding to the URL of the item image is displayed. The candidate fields are an item price, a delivery method, shipping cost information, a point granting rate, number of stocks, and an evaluation value. Also, the attribute fields listed herein are an example of the candidate fields. For example, attribute fields other than the attribute fields listed herein may be added to the item information as the candidate fields. Also, for example, at least one of the attribute fields listed herein may not be the candidate fields.

The item ID is identification information of an item for allowing a shop to manage items to be sold. The item ID is an example of the information indicating a transaction obj ect. The shop ID indicates a shop which is a distribution source of an item. The item code is a code number for identifying an item. The same item code is assigned to the same item. The item code is, for example, a Japanese Article Number Code (JAN) code. The item ID basically corresponds to an image page in one-to-one correspondence. Thus, different item IDs are assigned to a plurality of items of which the item codes are identical but the item information is different. In the present embodiment, items of which the item IDs are different from each other are referred to as mutually different items. Thus, items of which the item codes are the same as the selected item but the item IDs are different from the selected item may be extracted as comparative items with respect to the selected items. The genre ID is an ID of a genre to which an item belongs. Basically, a genre ID of a genre defined to the lowest level (genre corresponding to a leaf node in a tree structure) is set. That is, the genre of each item is divided into the most sub-divided genres. The item name is the name of the attribute field with a shop attached thereto. Therefore, the item name may be different from the official name of the item. The shipping cost information is information used for calculating a shipping cost of an item. For example, a corresponding shipping cost is set in the shipping cost information with respect to each prefecture being the destination of the item. The advertisement content is a content indicating an advertisement of an item. The advertisement content displays, for example, the advertisement of the item, information recommending the purchase of the item, and the like. For example, the advertisement content is displayed in a web page of an online mall. For example, the advertisement content may be image data, video data, text data, and the like. Also, the advertisement content may be a mixture of a plurality of types of data.

Fig. 4F is a diagram illustrating an example of contents registered in the query log DB 12f. In the query log DB 12f, a query log is registered. The query log is a history of retrieval conditions designated by a user. The query log is an example of a history in the present invention. Specifically, in the query log DB 12f, a receipt date and time, retrieval condition information, and a user ID are registered whenever the retrieval request is received. The retrieval request is a message transmitted from the user terminal 3 to the online mall server 1 when the user performs an operation of requesting to retrieve items by designating a retrieval condition. The retrieval request includes the retrieval condition information.

The receipt date and time is a date and time when the retrieval request was received. The retrieval condition information is information indicating the retrieval condition designated by the user. When a keyword is designated as the retrieval condition, the retrieval condition information includes the designated keyword. When a genre is designated as the retrieval condition, the retrieval condition information includes a genre ID of the designated genre. When a plurality of retrieval conditions is designated, the retrieval condition information includes a plurality of retrieval conditions. The user ID indicates a user who requested the retrieval.

Fig. 4G is a diagram illustrating an example of contents registered in the browsing history DB 12g. A browsing history of an item page is registered in the browsing history DB 12g. Specifically, in the browsing history DB 12g, a browsing date and time, an item ID, and retrieval condition information are registered in association whenever an item page is browsed.

The browsing date and time indicates the date and time when an item page was browsed. Specifically, the browsing date and time is the date and time when the online mall server 1 transmitted an item page to the user terminal 3. The item ID indicates an item of which the item page was browsed. The user ID indicates a user who browsed an item page. The retrieval condition information indicates the retrieval condition designated by the user when an item of which the item page was browsed is retrieved. When the user selects the link to the item page in the retrieval result page to transmit the corresponding item page to the user terminal 3, the system control unit 14 retrieves the query log having the latest receipt date and time from the query log DB 12f, among query logs including the user ID of the user having requested the retrieval. Then, the system control unit 14 acquires the retrieval condition information from the retrieved query log, and registers the browsing date and time including the acquired retrieval condition information. On the other hand, when the user selects the link to the item page in the bookmark page, the shopping cart page, or the purchase history page to transmit the corresponding item page to the user terminal 3, the system control unit 14 acquires the corresponding bookmark information, shopping cart information, or purchase history from the retrieval condition information. Then, the system control unit 14 registers the browsing history including the acquired retrieval condition information. Also, details of the bookmark information, the shopping cart information, and the purchase history will be described below.

Fig. 4H is a diagram illustrating an example of contents registered in the shopping cart information DB 12h according to the present embodiment. In the shopping cart information DB 12h, the shopping cart Information on the shopping cart is registered. Specifically, in the shopping cart information DB 12h, a user ID, a shop ID, an item ID, number of inputs, and retrieval condition information are registered with each item input into the shopping cart.

The user ID indicates a user who input an item into the shopping cart. The shop ID indicates a shop which is a distribution source of an item input in the shopping cart. The item ID indicates an item input in the shopping cart. The input number indicates the number of items input in the shopping cart. The retrieval condition information indicates a retrieval condition designated by the user when an item input in the shopping cart is retrieved. When the shopping cart information is registered by selecting the shopping cart input button in the item page, the system control unit 14 retrieves the browsing history of the displayed item page from the browsing history DB 12g. That is, the system control unit 14 retrieves the browsing history having the latest browsing date and time among the browsing histories including the user ID of the user who inputted the item into the shopping cart. Then, the system control unit 14 acquires the retrieval condition information from the retrieved browsing history, and registers the shopping cart information including the acquired browsing history.

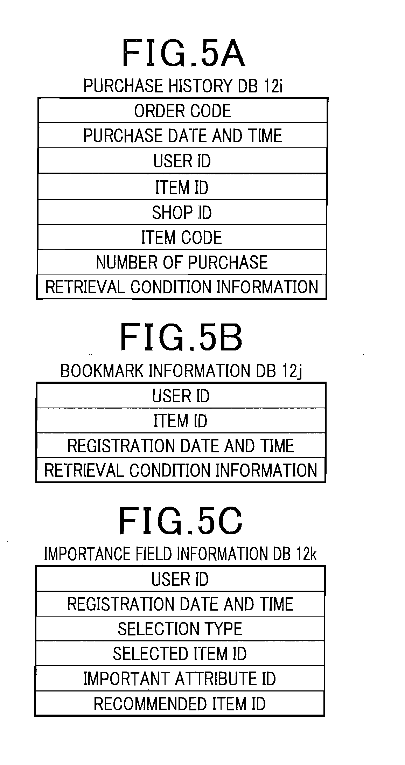

Fig. 5A is a diagram illustrating an example of contents registered in the purchase history DB 12i. In the purchase history DB 12i, a purchase history of items purchased by a user is registered. Specifically, in the purchase history DB 12i, an order code, a purchase date and time, a user ID, an item ID, a shop ID, an item code, the number of purchases, purchase condition information, and the like are registered in association with each purchase of items. The order code is identification information of an order assigned whenever an item is ordered. The user ID indicates a user who purchased an item. The item ID and the item code indicate a purchased item. The shop ID indicates a shop which is a purchase destination. The number of purchases is the number of items purchased. The retrieval condition information indicates the retrieval condition designated by the user when a purchased item is retrieved. The system control unit 14 registers the purchase history based on the shopping cart information registered in the shopping cart information DB 12h. In this case, the system control unit 14 acquires the retrieval condition information from the shopping cart information, and registers the shopping cart information including the acquired browsing history.

Fig. 5B is a diagram illustrating an example of contents registered in the bookmark information DB 12j. In the bookmark information DB 12j, bookmark information on the bookmark of a user is registered. Specifically, in the bookmark information DB 12j, a user ID, an item ID, a registration date and time, retrieval condition information, and the like are registered in association whenever an item is registered in a bookmark.

The user ID indicates a user who has registered an item in a bookmark. The item ID indicates an item registered in a bookmark. Moreover, the item ID is information corresponding to a reference to an item page of the item registered in the bookmark. Although the information of an actual reference to the item page is a URL, the URL of the item page can be specified from the item ID. Also, the URL of the item page may be registered in the bookmark information DB 12j together with the item ID or in place of the item ID. The registration date and time indicates the date and time when an item was registered in the bookmark. The retrieval condition information indicates the retrieval condition designated by the user when an item registered in the bookmark is retrieved. When the bookmark information is registered by selecting the link displayed as "add to bookmark" in the item page, the system control unit 14 retrieves the browsing history of the displayed item page from the browsing history DB 12g. Then, the system control unit 14 acquires the retrieval condition information from the retrieved browsing history, and registers the shopping cart information including the acquired browsing history.

Fig. 5C is a diagram illustrating an example of contents registered in the importance field information DB 12k. In the importance field information DB 12k, importance field information on the attribute fields specified as the attribute fields regarded as important by the user is registered. Specifically, in the importance field information DB 12k, a user ID, a registration date and time, a selection type, a selected item ID, an importance attribute ID, a recommended item ID, and the like are registered in association with each other.

The user ID indicates a user who specified the attribute field regarded as important. The registration date and time is the date and time when the importance field information was registered. The selection type indicates a type of an item selection action. Specifically, any one of "bookmark" indicating the registration to the bookmark, "shopping cart" indicating the input into the shopping cart, and "purchase" indicating the purchase is set in the selection type. The selected item ID is an item ID of a selected item in which the attribute field regarded as important by the user was specified. The importance attribute ID is an attribute ID of the attribute field regarded as important by the user. The recommended item ID is an item ID of a candidate of an item of which the purchase is recommended to the user. A candidate of an item of which the purchase is recommended to the user is referred to as "recommended item". When the advertisement content is displayed on the web page browsed by the user, the advertisement content of the recommended item is preferentially displayed. The recommended item is selected according to the attribute field regarded as important by the user. A plurality of recommended items may be selected. In that case, a plurality of recommended item IDs is registered.

Next, other pieces of information stored in the storage unit 12 will be described. Various types of data such as a hypertext markup language (HTML) document, an extensible markup language (XML) document, image data, text data, and an electronic document for displaying a web page are stored in the storage unit 12. An example of the set value is "within a comparative item extraction time" and the like.

Moreover, various programs such as an operating system, a world wide web (WWW) server program, a database management system (DBMS), and an electronic commerce management program are stored in the storage unit 12. The electronic commerce management program is a program for executing various processes associated with electronic commerce. The electronic commerce management program includes a program for specifying the attribute field regarded as important by the user, and selecting the recommended item. Also, the various programs may be acquired from another server apparatus through the network NW or may be recorded in a recording medium such as a digital versatile disc (DVD) and read by a drive device.

The input/output interface 13 is configured to perform interfacing processes between the communication unit 11 and the storage unit 12, and the system control unit 14.

The system control unit 14 is configured to include a CPU 14a, a read only memory (ROM) 14b, a random access memory (RAM) 14c, and the like. The system control unit 14 is configured to function as a first extracting means, a second extracting means, a specifying means, a determining means, a selectingmeans, and a providing means of the present invention when the CPU 14a reads and executes various programs.

Also, the online mall server 1 may be configured by a plurality of server apparatuses. For example, a server s that performs processes for specifying an attribute field regarded as important by the user, a server apparatus that performs processes associated with retrieving, ordering, and the like of items in an online mall, a server apparatus that transmits a web page in response to a request from the user terminal 3, a server apparatus that manages databases, and the like may be connected to each other by a LAN or the like.

### [1-4. Operation of Information Providing System]

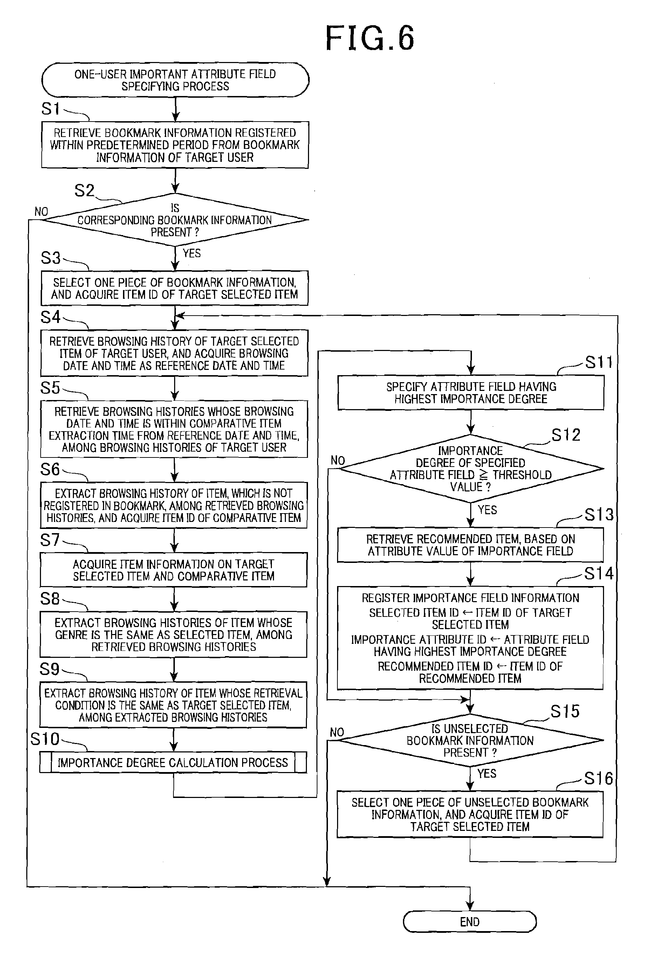

Next, the operation of the information providing system S will be described with reference to Fig. 6 to Fig. 8.

Fig. 6 is a flowchart illustrating a processing example of a one-user importance attribute field specification process of the system control unit 14 of the online mall server 1 according to the present embodiment.

The system control unit 14, for example, periodically performs the process of specifying the attribute field regarded as important by the user. The system control unit 14 specifies the attribute field regarded as important by each user with respect to each user. The one-user importance field specification process is a process of specifying an attribute field regarded as important by the user with respect to one user. Therefore, the one-user importance attribute field specification process is performed for each user.

Also, in each of the bookmark, the shopping cart, and the purchase, the process of specifying the attribute field regarded as important by the user is basically identical, except that information for specifying the selected item is different. Therefore, the process in the bookmark will be described below on behalf of them. Herein, the user being the target of which the attribute field regarded as important is to be specified is referred to as "target user".

As illustrated in Fig. 6, the system control unit 14 retrieves bookmark information registered within a preset period, from the bookmark information DB 12j, among bookmark information including a user ID of a target user (step S1). The preset period is, for example, from the execution of the previous one-user importance attribute field specification process to the current time point with respect to the target user. Subsequently, the system control unit 14 determines whether the corresponding bookmark information has been retrieved (step S2). In this case, when the system control unit 14 determines that the corresponding bookmark information has not been retrieved (step S2: NO), the system control unit 14 ends the one-user importance attribute field specification process.

On the other hand, when the system control unit 14 determines that the corresponding bookmark information has been retrieved (step S2: YES), the system control unit 14 selects one piece of the retrieved bookmark information. Subsequently, the system control unit 14 acquires the item ID of the selected item, from the selected bookmark information, as the item ID of the target selected item (step S3).

Subsequently, the system control unit 14 retrieves, from the browsing history DB 12g, the browsing history including the user ID of the target user and the item ID of the target selected item (step S4). Then, the system control unit 14 acquires a browsing date and time included in the browsing history as reference date and time. Herein, there is a case where a plurality of corresponding browsing histories is registered. Therefore, the system control unit 14, for example, may retrieve the browsing history of which the browsing date and time is closest to the registration date and time of the bookmark, among the browsing histories of which the browsing date and time is earlier than the registration date and time of the selected bookmark.

Subsequently, the system control unit 14 functions as a first extracting means to retrieves, from the browsing history DB 12g, the browsing histories of which the browsing date and time is within a comparative item extraction time before and after the browsing date and time, among browsing histories including the user ID of the target user and the item ID of the target selected item (step S5).

Subsequently, the system control unit 14 functions as a second extracting means to extract the browsing history of the item unregistered in the current bookmark, among the retrieved browsing histories. Subsequently, the system control unit 14 acquires the item ID included in each extracted browsing history, as the item ID of the comparative item (step S6). Specifically, the system control unit 14 retrieves the bookmark information including the user ID of the target user from the bookmark DB 12j. Subsequently, the system control unit 14 acquires the item ID from the retrieved each bookmark information. Subsequently, the system control unit 14 deletes, from the retrieved browsing history, the browsing history including the same item ID as any one of the item IDs acquired from the bookmark information. As a result, the remaining browsing history is the extracted browsing history.

Subsequently, the system control unit 14 acquires the item information of the target selected item and the item information of the comparative item from the item information DB 12e (step S7).

Subsequently, the system control unit 14 extracts, from the extracted browsing histories, the browsing histories of the item belonging to the same genre as the target selected item (step S8). Specifically, the system control unit 14 acquires the genre ID from the item information of the target selected item, and acquires the genre ID from the item information of the comparative item. Then, the system control unit 14 determines whether the target selected item and the comparative item be long to the same genre, based on the genre ID. For example, the system control unit 14 may compare the genre ID of the target selected item with the genre ID of the comparative item, and determine that the target selected item and the comparative item belong to the same genre when the genre IDs are matched with each other. In this case, at the lowest level, it is determined whether the genre of the target selected item and the genre of the comparative item are identical to each other. Then, the system control unit 14 extracts the browsing history of the item having the same genre ID as the target selected item.

Also, for example, at a level higher than the lowest level, the system control unit 14 may determine whether the genre of the target selected item and the genre of the comparative item are identical to each other. This is because, when it is determined whether the genres are identical to each other at the lowest level, there is a case where the range of the item belonging to the same genre is narrowed. For example, as a genre of a level 2, there is a "digital camera". Also, as a child genre of the "digital camera", the genre division is performed with respect to each maker of the digital camera. For example, as a genre of a level 3, there are "company X", "company Y", and "company Z" or the like. In this case, there is a case where it is reasonable to make the determination as to whether the items belong to the same genre at the level 2 rather than at the level 3. This is because it is general to perform the selection from digital cameras beyond the boundary of the maker. Also, the determination as to whether the items belong to the same genre at any level may be identical at all genres, or may be made with respect to each genre. The parent genre ID is set in the genre information registered in the genre information DB 12b. Therefore, the genre ID of the parent genre can be acquired from the genre information corresponding to the genre ID of the target selected item or the comparative item. Therefore, the system control unit 14 can acquire the genre ID of the genre of the level to be compared, among the genres to which the target selected item or the comparative item belong. Then, the system control unit 14 may determine whether the acquired genre ID of the target selected item and the genre ID of the comparative item are identical to each other in the genre of the level to be compared.

Subsequently, the system control unit 14 extracts, from the browsing histories extracted in step S8, the browsing histories of the item retrieved under the same retrieval condition as the target selected item (step S9). Subsequently, the system control unit 14 acquires retrieval condition information from the selectedbookmark information, and acquires retrieval condition information from the extracted browsing histories. Subsequently, the system control unit 14 determines whether the retrieval condition information of the target selected item is matched with the retrieval condition information of the comparative item. Herein, when a plurality of retrieval conditions is designated, the system control unit 14 may determine that the retrieval condition information is matched only when all retrieval conditions are matched, or may determine that the retrieval condition information is matched only when at least one of the retrieval conditions is matched. Then, the system control unit 14 extracts the browsing history of the item of which the retrieval condition information is matched with the target selected item.

Then, the system control unit 14 extracts the final comparative item. Also, the system control unit 14 may perform steps S7 to S9 after step S5. Also, the system control unit 14 may perform either of step S8 and step S9, or may not perform both of step S8 and step S9. The system control unit 14 may set the item extracted in step S6 as the final comparative item.

Also, when the system control unit 14 cannot extract the item satisfying the condition in step S6, S8 or S9, the system control unit 14 proceeds to step S15. In this case, for the target selected item, the attribute field regarded as important by the user is not specified.

When the comparative item is extracted, the system control unit 14 performs an importance degree calculation process (step S10).

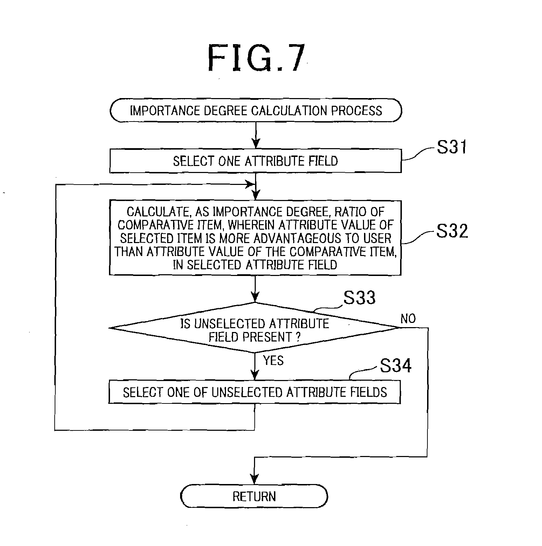

Fig. 7 is a flowchart illustrating a processing example of an importance degree calculation process of the system control unit 14 of the online mall server 1 according to the present embodiment.

As illustrated in Fig. 7, the system control unit 14 selects one attribute field from candidate fields (step S31). Subsequently, the system control unit 14 calculates the importance degree of the selected attribute field (step S32). Specifically, the system control unit 14 acquires advantage attribute value information corresponding to the selected attribute field from the attribute definition information DB 12d. Subsequently, the system control unit 14 acquires the attribute value corresponding to the selected attribute field from the item information of the target selected item, and acquires each attribute value corresponding to the selected attribute field. Subsequently, the system control unit 14 compares the attribute value of the target selected item with the attribute value of the comparative item, and determines whether the attribute value of the target selected item is advantageous, based on the advantage attribute value information, with respect to each comparative item. Subsequently, the system control unit 14 counts the number of the comparative items in which the attribute value of the target selected item is advantageous. Then, the system control unit 14 calculates the importance degree by dividing the number of the comparative items, in which the attribute value of the target selected item is advantageous, by the total number of the comparative items.

When the system control unit 14 calculates the importance degree, the system control unit 14 determines whether unselected attribute fields are present in the candidate fields (step S33) . At this time, when the system control unit 14 determines that the unselected attribute fields are present (step S33: YES), the system control unit 14 selects one of the unselected attribute fields (step S34). Subsequently, the system control unit 14 proceeds to step S32. The system control unit 14 calculates the importance degree of each attribute field by repeating the processes of steps S32 to S34. Then, when the system control unit 14 determines that all the attribute fields are selected (step S33: NO), the system control unit 14 ends the importance degree calculation process.

When the system control unit 14 ends the importance degree calculation process, as illustrated in Fig. 6, the system control unit 14 specifies the attribute field having the highest importance degree among the attribute fields of which the importance degree has been calculated (step S11). Subsequently, the system control unit 14 determines whether the importance degree of the specified attribute field is equal to or greater than a preset threshold value (step S12). For example, the threshold value is set by an administrator or the like of an online mall and is stored in the storage unit 12. At this time, when the system control unit 14 determines that the importance degree of the specified attribute field is not equal to or greater than the threshold value (step S12: NO), the system control unit 14 proceeds to step S15. In this case, the specified attribute field is not the attribute field regarded as important by the target user. The reason why the threshold value is provided is that even though the attribute field has a relatively highest importance degree, the attribute field of which the absolute value of the importance degree is excessively low is less probable to be the attribute field regarded as important by the user.

On the other hand, when the system control unit 14 determines that the importance degree of the specified attribute field is equal to or less than the threshold value (step S12: YES), the system control unit 14 determines the specified attribute field as the attribute field regarded as important by the target user. Thus, the system control unit 14 functions as a specifying means to specify the attribute field regarded as important by the user, based on attribute values differently set between the selected item and the comparative item. Specifically, the system control unit 14 specifies the attribute field in which the attribute value of the selected item is more advantageous to the user than the attribute value of the comparative item, as the attribute field regarded as important by the user, among the attribute fields where the attribute values are set in both of the selected item and the comparative item.

Subsequently, the system control unit 14 functions as a selecting means to retrieve the recommended item (step S13). For example, the criteria of the recommended item is whether the item is an itemhaving an attribute value considered as desired by the user in the attribute field regarded as important by the target user. Therefore, the system control unit 14, for example, may retrieve the item in which the attribute value of the attribute field regarded as important by the target user is equal to the attribute value of the target selected item or more advantageous than the attribute value of the target selected item. At this time, the system control unit 14 may set the item to be retrieved as the item belonging to the same genre as the target selected item. The determination as to whether the items belong to the same genre at any level is the same as step S8. Also, the system control unit 14 may limit the maximum value of the recommended items, instead of setting all the retrieved items as the recommended items. Then, the system control unit 14 may arbitrarily select the recommended items from the retrieved items within the range up to the maximum number.

Also, when processing is performed such that a plurality of attribute fields is specified with respect to one selected item, the system control unit 14, for example, may retrieve the item in which the attribute values in all the attribute fields regarded as important by the target user are equal to the attribute value of the corresponding attribute field in each selected item or more advantageous than the attribute value of the selected item.

When the system control unit 14 retrieves the recommended item, the system control unit 14 registers the importance field information in the importance field information DB 12k (step S14). At this time, the system control unit 14 sets the item ID of the target selected item as the recommended item ID. Also, the system control unit 14 sets the current date and time as the registration date and time. Also, the system control unit 14 sets "bookmark" as the selection type. Also, the system control unit 14 sets the attribute ID of the attribute field regarded as important by the target user, as the importance attribute ID. Also, the system control unit 14 sets the item ID of the recommend item ID as the recommended item ID. Then, the system control unit 14 registers the importance field information including the target user ID, the selected item ID, the registration date and time, the importance attribute ID, and the recommended item ID.

Subsequently, the system control unit 14 determines whether unselected bookmark information is present in the bookmark information retrieved in step S1 (step S15). At this time, when the system control unit 14 determines that the unselected bookmark information is present (step S15: YES), the system control unit 14 selects one of pieces of the unselected bookmark information (step S16). Subsequently, the system control unit 14 proceeds to step S4. The system control unit 14 repeats steps S4 to S16 to specify the attribute field regarded as important by the target user in each item registered in the bookmark within a preset period. Then, when the system control unit 14 determines that all pieces of the bookmark information have been selected (step S15: NO), the system control unit 14 ends the one-user importance attribute field specification process.

Also, when the attribute field regarded as important by the user in the shopping cart is specified, the information for specifying the selected item is not the bookmark information but the shopping cart information. Also, in this case, the selection type is "shopping cart". When the attribute field regarded as important by the user in the purchase is specified, the information for specifying the selected item is not the bookmark information but the purchase history. Also, in this case, the selection type is "purchase".

Also, the execution timing of the one-user importance attribute field specification process is not limited to the above-described timing. For example, after any one of the registration of the item to the bookmark, the input of the item into the shopping cart, and the purchase of the item is performed, the system control unit 14 may perform the one-user importance attribute field specification process after a comparative item extraction time has elapsed. That is, the system control unit 14 may perform the one-user importance attribute field specification process after the item selection action is performed. In this case, the system control unit 14 performs the one-user importance attribute field specification process by setting the user having performed the selection at that time as the target user and setting the item having been selected by the selection action at that time as the target selected item.

Also, the system control unit 14 may specify the recommended item at a timing different from the timing of specifying the attribute field regarded as important by the user. Also, the system control unit 14 may not specify the recommended item.

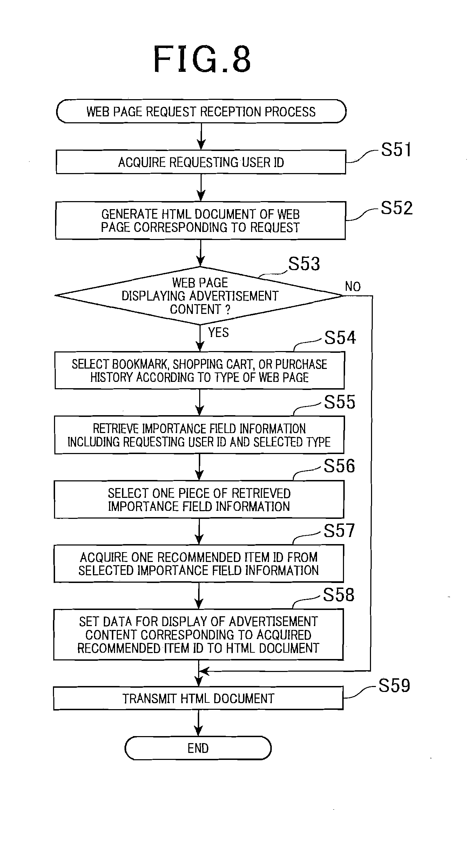

Fig. 8 is a flowchart illustrating a processing example of a web page request reception process of the system control unit 14 of the online mall server 1 according to the present embodiment. The web page request reception process is started when the online mall server 1 receives the web page request from the user terminal 3.

As illustrated in Fig. 8, the system control unit 14 acquires the user ID of the user using the user terminal 3 having transmitted the request, from the received request, as the requesting user ID (step S51). For example, the system control unit 14 receives the user ID from the user terminal 3 upon the user's login to the information providing system S, and stores the received user ID in the user terminal 3 as a cookie. Therefore, in a case where the user logs in, the cookie including the requesting user ID is added to a request that is to be transmitted from the user terminal 3 to the online mall server 1. Subsequently, the system control unit 14 generates the HTML document of the web page corresponding to the URL included in the received request (step S52).

Subsequently, the system control unit 14 determines whether the web page where the HTML document is generated is the web page displaying the advertisement content (step S53). Examples of the web page include a top page, a retrieval result page, an item page, a bookmark page, a shopping cart page, and a purchase history page or the like. For example, which web page the advertisement content is displayed onmaybe arbitrarily determined by an administrator of an onlinemall. As one example, it is assumed that the advertisement content is displayed in the top page, the retrieval result page, and the bookmark page. When the system control unit 14 determines that the web page where the HTML document is generated is not the web page displaying the advertisement content (step S53: NO), the system control unit 14 transmits the generated HTML document to the user terminal 3 of the transmission source of the request (step S59). When the system control unit 14 completes this process, the system control unit 14 ends the web page request reception process.

On the other hand, when the system control unit 14 determines that the web page where the HTML document is generated is the web page displaying the advertisement content (step S53: YES), the system control unit 14 selects the selection type of the importance field information, which is used for determining the recommended item displayed by the advertisement content, according to the type of the web page wherein the HTML document is generated (step S54). This selection is performed for enhancing the advertising effect. For example, when the web page is the top page, the system control unit 14 may select "bookmark" or "shopping cart". Also, when the web page is the retrieval result page, the system control unit 14 may select "bookmark" or "shopping cart". Also, when the web page is the bookmark page, the system control unit 14 may select "purchase history". Also, the system control unit 14 may, for example, select the selection type randomly.

Subsequently, the system control unit 14 retrieves, from the importance field information DB 12k, the importance field information including the requesting user ID and the selected selection type (step S55). Subsequently, the system control unit 14 selects one of pieces of the retrieved importance field information (step S56). For example, the system control unit 14 may select the importance field information randomly. Also, the system control unit 14 may select the importance field information having the latest registration date and time. As the date and time when the attribute field regarded as important by the user was specified is later, it is highly likely that the user currently regards the attribute field as important. Also, the system control unit 14 may randomly select any one of pieces of the importance field information registered from the current time point to before the preset time.

Subsequently, the system control unit 14 acquires one of recommended item IDs included in the selected importance field information (step S57). For example, the system control unit 14 may select the recommended item ID randomly. Subsequently, the system control unit 14 sets data for displaying the advertisement content of the recommended item indicated by the acquired recommended item ID in the web page, in the generated HTML document (step S58).

Also, when a plurality of advertisement contents can be displayed in the web page, the system control unit 14 may perform steps S56 to 58 a plurality of times.

Subsequently, the system control unit 14 transmits the HTML document where the data for displaying the advertisement content is set, to the user terminal 3 of the transmission source of the request (step S59). In this manner, the system control unit 14 functions as a providing means toprovide the user terminal 3 with the web page including the advertisement content of the selected recommended item. When the system control unit 14 completes this process, the system control unit 14 ends the web page request reception process.

When receiving the HTML document, the user terminal 3 displays the web page on the screen, based on the HTML document. AT this time, the user terminal 3 displays the advertisement content in the web page. When the user selects the advertisement content, the item page of the corresponding recommended item is displayed on the screen of the user terminal 3.

Also, the means that provides the information of the recommended item is not limited to the web page. For example, the information of the recommended item may be provided by an email such as an email magazine of an online mall.

As described above, according to the present embodiment, the system control unit 14 of the online mall server 1 extracts items of which item pages were browsed within a comparative item extraction time, from browsing time of the item page of the item registered in a bookmark, a shopping cart, or a purchase history, where the items selected by the user are registered, among the items of which the item page including item attribute values have been browsed to the user, extracts the comparative item that have not been registered in the bookmark, the shopping cart, or the purchase history among the extracted items, and specifies attribute fields regarded as important by the user, based on attribute values differently set between the selected item and the comparative item. Specifically, the system control unit 14 specifies the attribute field in which the attribute value of the selected item is more advantageous to the user than the attribute value of the comparative item, as the attribute field regarded as important by the user. Therefore, for the item selection, the attribute field regarded as important by the user can be specified.

Also, the system control unit 14 extracts the comparative item where a retrieval condition stored in the storage unit 12 is the same as a retrieval condition stored in the storage unit 12, the former storage unit 12 storing as the corresponding browsing history, in association, an item ID indicating the item of which the item page was browsed, and a retrieval condition designated by the user so as to retrieve the item of which the item page was browsed, the latter storage unit 12 storing as the bookmark information, in association, an item ID indicating the item registered in the bookmark, and information designated by the user so as to retrieve the item registered in the bookmark. Therefore, since it is possible to increase the extraction accuracy of the selected item and the comparative item, the user can increase the specifying accuracy of the attribute field regarded as important by the user.

Also, the system control unit 14 selects the recommended item recommended to the user for transaction, based on the attribute value of the specified attribute field, and provides the advertisement content of the selected recommended item. Therefore, since the item recommended to the user for transaction is selected based on the attribute value of the attribute field regarded as important by the user, it is possible to provide the user with the advertisement content of the item that is highly probable that the user will be interested in that item.

### [2. Second Embodiment]

In the first embodiment, the candidate field is limited to the attribute field in which the attribute value is preset in the item information. In contrast, in the second embodiment to be described below, the shop can arbitrarily add the attribute value to the item information with respect to new attribute fields. Therefore, the new attribute field is also the candidate field. Herein, the attribute field where the attribute value is preset to the item information is referred to as "common field". The attribute field where the new attribute value is added is referred to as "option field". Also, the attribute of the option field is referred to as "option attribute value".

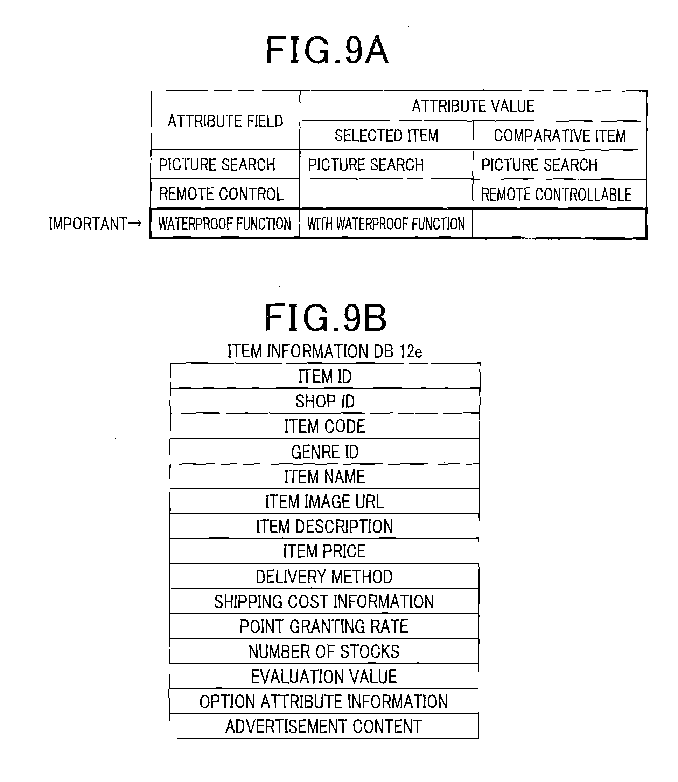

Fig. 9A is a diagram illustrating an example of contents of each option attribute value of a selected item and a comparative item. Fig. 9A illustrates an example of a case where the selected item and the comparative item are digital cameras. The shop, for example, can set the option attribute value by inputting a character indicating the content of the attribute of the option field. For example, it is assumed that the selected item and the shop of the selling side set the option value of "picture search" and "waterproof function". The "picture search" indicates that there is the picture search function. The picture search function is a function that can allow the user to search images stored in the digital camera under a condition designated by the user. The "waterproof function" indicates that there is the waterproof function. On the other hand, it is assumed that the comparative item and the shop of the selling side set the option attribute value of "picture search" and "remote controllable". The "remote controllable" indicates that the photographing can be performed by the digital camera by the remote control.

As a result, the option attribute value indicating that there is the picture search function is set in both of the selected item and the comparative item. Therefore, the attribute field of "picture search" is not determined as the attribute field regarded as important by the user.

On the other hand, in the attribute fields of the remote control and the waterproof function, the option attribute value is set to either of the selected item and the comparative item. That is, the setting of the attribute value is different in the selected item and the comparative item. Specifically, the presence and absence of the setting of the attribute value is different. In this case, the online mall server 1 specifies the attribute field where the option attribute is determined as advantageous, as the attribute field regarded as important by the user, based on the set option attribute value among the attribute fields where the option attribute value is set to only the selected item.

For example, when the attribute value for the remote control is set, either of "remote controllable" and "remote uncontrollable" is set. The "remote uncontrollable" indicates that the photographing cannot be performed through the digital camera by the remote control. The digital camera that can perform the photograph by the remote control is more advantageous to the user than the digital camera that cannot perform the photograph. Therefore, the comparative item where the "remote controllable" is set is an item that is more advantageous to the user in the remote control. On the other hand, in the selected item, either of the "remote controllable" and the "remote uncontrollable" is not set. Therefore, it is impossible to know whether the selected item is advantageous to the user in the remote control. The shop may not just set the attribute value of the remote control. However, in the remote control, it is clear that the selected item is not advantageous than the comparative item. Therefore, the remote control is not determined to be the attribute field regarded as important by the user.

When the attribute value for the waterproof function is set, for example, either of "with waterproof function" and "without waterproof function" is set. The "without waterproof function" indicates that there is no waterproof function. The digital camera with the waterproof function is more advantageous to the user than the digital camera without waterproof function. Therefore, the selected item where the "with waterproof function" is set is an item that is more advantageous to the user in the waterproof function. On the other hand, in the comparative item, either of the "with waterproof function" and the "without waterproof function" is not set. Therefore, it is impossible to know whether the comparative item is advantageous to the user in the waterproof function. However, the user determines whether to select the item based on the attribute value displayed in the itempage. Therefore, when the user regards the waterproof function as important, the user selects the item where "with waterproof function" is displayed in the item page, rather than the item where the waterproof function is not displayed in the item page. Therefore, the waterproof function is specified as the attribute field that is regarded as important by the user.

Fig. 9B is a diagram illustrating an example of contents registered in the item information DB 12e. As illustrated in Fig. 9B, the item information registered in the item information DB 12e includes option attribute information, as well as each information illustrated in Fig. 4E. In the option attribute information, the optional attribute value added by the shop is set.

Also, in the attribute definition information DB 12d, in addition to the attribute definition information of the common field, the attribute definition information of the option field where the option attribute value can be set is also registered. For example, the data type of the option field is a character string type. In the advantage attribute information of the option field, for example, the optional attribute value determined as advantageous is set. Specifically, the option attribute value that is most advantageous to the user among the settable option attribute values is set. For example, when only two types exist as the settable optional attribute values, the option attribute value of the advantageous side is set in the advantage attribute value information. The option attribute value is displayed in the item page.

Except for the description so far, the configuration of the information providing system S, and the configuration and processing contents of the online mall server 1 according to the second embodiment are basically identical to the case of the first embodiment.

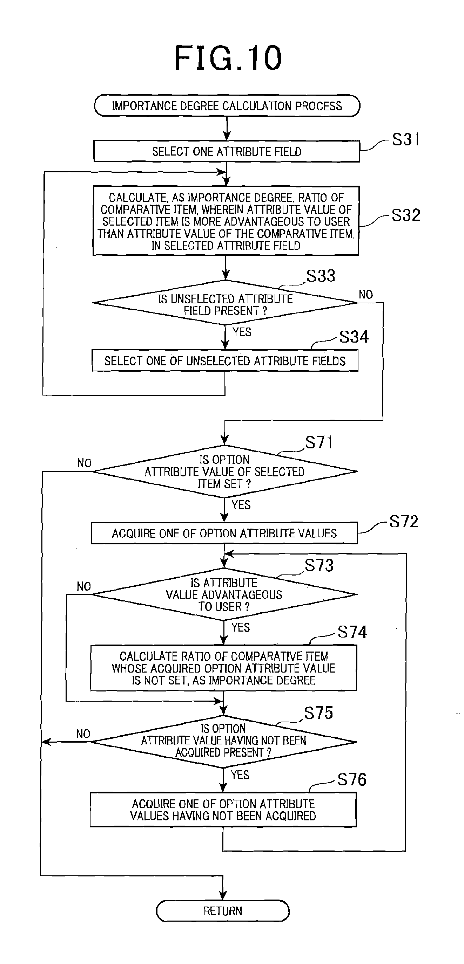

Fig. 10 is a flowchart illustrating a processing example of an importance degree calculation process of the system control unit 14 of the online mall server 1 according to the present embodiment. In Fig. 10, the same reference numbers are assigned to the same processes as those of Fig. 7.

As illustrated in Fig. 10, the system control unit 14 performs steps S31 to S34 in the same manner as the case of the first embodiment. Also, in steps S31 to S34, the importance degree of the common field is calculated. In step S33, when the system control unit 14 determines that all the attribute fields are selected (step S33: NO), the system control unit 14 calculates the importance degree of the option field.

First, the system control unit 14 determines whether the option attribute information of the target selected item is set to the item information of the target selected item (step S71) . At this time, when the system control unit 14 determines that the option attribute information of the target selected item is set (step S71: NO), the system control unit 14 ends the importance degree calculation process. On the other hand, when the system control unit 14 determines that the option attribute information of the target selected item is not set (step S71: YES), the system control unit 14 acquires one option attribute value from the option attribute information (step S72).

Subsequently, the system control unit 14 determines whether the acquired option attribute value is an attribute value advantageous to the user (step S73). Specifically, the system control unit 14 retrieves the attribute definition information where the acquired option attribute value is set in the advantage attribute value information, from the attribute definition information DB 12d. Herein, when the system control unit 14 cannot retrieve the attribute definition information satisfying the condition, the system control unit 14 determines that the acquired option attribute value is not an attribute value advantageous to the user (step S73: NO). In this case, the system control unit 14 proceeds to step S75.

On the other hand, when the attribute definition information satisfying the condition can be retrieved, the system control unit 14 determines that the acquired option attribute value is an attribute value advantageous to the user (step S73: YES). In this case, the system control unit 14 calculates the importance degree of the option attribute field indicated by the attribute ID included in the retrieved attribute definition information (step S74). Specifically, the system control unit 14 determines whether the same option attribute value as the option attribute value of the acquired target selected item is set in the option attribute information of the item information of each comparative item. Subsequently, the system control unit 14 counts the number of the comparative items in which the same option attribute value as the option attribute value of the target selected item is not set. In the comparative item where the same option attribute value as the option attribute value of the target selected item is not set, the item where the option attribute value of the option field indicated by the attribute ID included in the retrieved attribute definition information is not set, and the item where the option attribute value of the side disadvantageous to the user is set are included. The system control unit 14 calculates the importance degree by dividing the number of the comparative items, in which the same option attribute value as the option attribute value of the target selected item is not set, by the total number of the comparative items.

Subsequently, the system control unit 14 determines whether the option attribute value having yet not been acquired is present in the option attribute information of the target selected item (step S75). At this time, when the system control unit 14 determines that the option attribute value having yet not been acquired is present (step S75: YES), the system control unit 14 acquires one of the option attribute values having yet not been acquired (step S76). Subsequently, the system control unit 14 proceeds to step S73. The system control unit 14 calculates the importance degree of each option attribute field by repeating the processes of steps S73 to S76. Then, when the system control unit 14 determines that all the option attribute values have been acquired (step S75: NO), the system control unit 14 ends the importance degree calculation process.

As described above, according to the present embodiment, the system control unit 14 specifies the attribute field in which the set attribute value is advantageous to the user, as the attribute field regarded as important by the user, among the attribute fields where the attribute value is set in only the selected item among the selected item and the comparative item. Therefore, in a certain attribute field, when the attribute value is not set in the items excluded from the selection target while the attribute value determined as advantageous to the user is set to the selected item, it can be determined that the corresponding attribute field is regarded as important by the user.

### [3. Third Embodiment]

In the first embodiment, the candidate fields have been common to all items. In contrast, in the third embodiment to be described below, the attribute field unique to the genre is set in the genre of the item. Then, the attribute value of the attribute field unique to the genre is set in the item information. Also, the candidate field is determined according to the genre. The reason why the candidate field is determined according to the genre is that the attribute field regarded as important by the user is changed according to the genre. The genre is an example of the class in the present invention. Herein, the attribute field where the attribute value is commonly set to all items is referred to as "common field". Also, the attribute field unique to the genre is referred to as "unique field". Also, the common field in the third embodiment is basically identical to the common field in the second embodiment.

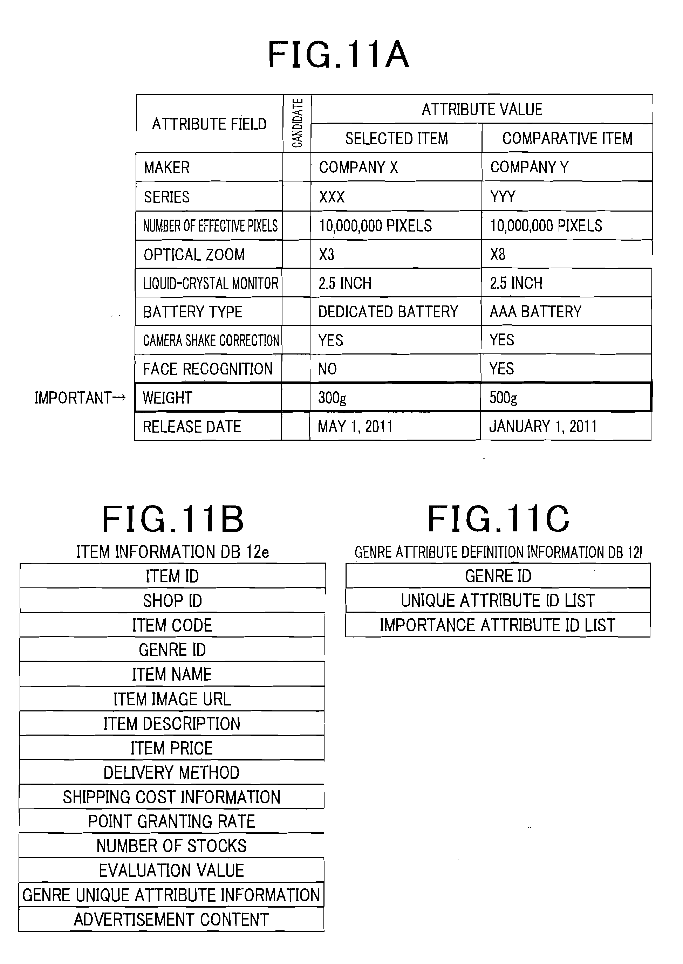

Fig. 11A is a diagram illustrating an example of contents of an attribute value of a unique field of each of a selected item and a comparative item. Fig. 11A illustrates an example of a case where the selected item and the comparative item are digital cameras. Examples of the unique field of the digital camera include a maker, a series, number of effective pixels, magnification of an optical zoom, a size of a liquid-crystal monitor, a battery type, a camera shake correction function, a face recognition function, a weight, and a release date or the like. The candidate fields among these unique fields are the number of the effective pixels, the optical zoom, the liquid-crystal monitor, the camera shake correction function, the face recognition function, and the weight or the like. For example, the attribute fields where it is impossible to determine whether the attribute value is advantageous to the user are excluded from the candidate fields. Also, for example, although the attribute fields where it is impossible to determine whether the attribute value is advantageous to the user are present, the attribute fields that are less probable to be regarded as important by the user are excluded from the candidate fields. Also, since there is a case where the basic performance is different in the series of the digital camera, it is considered that the series is also included in the candidate field. Also, as the release date is latest, for example, it is considered that the performance is higher or a newer function is provided. Therefore, the series or the release date are also the candidate fields. For example, which attribute field is set as the candidate field can be arbitrarily determined by an administrator of an online mall with respect to each genre.

In the example of Fig. 11A, the selected item and the comparative item are different from each other in view of the maker, the series, the battery type, and the release date. However, these attribute fields are not the candidate fields. Therefore, these attribute fields are not determined to be the attribute fields regarded as important by the user.

Among the candidate fields, the number of the effective pixels, the size of the liquid-crystal monitor, and the camera shake correction function are mutually identical between the selected item and the comparative item. Therefore, these attribute fields are not determined to be the attribute fields regarded as important by the user.

The attribute values of the magnification of the optical zoom, the face recognition function, and the weight are different between the selected item and the comparative item. A digital camera having a higher magnification of the optical zoom is more advantageous to the user. Also, a digital camera with the face recognition function is more advantageous to the user than a digital camera without face recognition function. Also, a digital camera having a smaller weight is a digital camera that is more advantageous to the user. This is because the digital camera having a smaller weight is more convenient to carry. Herein, the magnification of the optical zoom of the selected item is lower than the magnification of the optical zoom of the comparative item. Also, the selected item does not have the face recognition function. Also, the weight of the selected item is smaller than the weight of the comparative item. Therefore, the weight is specified as the attribute field that is regarded as important by the user.

Fig. 11B is a diagram illustrating an example of contents registered in the item information DB 12e. As illustrated in Fig. 11B, the item information registered in the item information DB 12e includes attribute information unique to the genre, as well as each information illustrated in Fig. 4E. In the attribute information unique to the genre, the attribute value is set in each unique field of the genre to which the item belongs. Also, the attribute information unique to the genre may not be set according to the genre.

Also, in the attribute definition information DB 12d, in addition to the attribute definition information of the common field, the attribute definition information of the unique field is also registered. For the attribute fields identical in the unique field, there is a case where the advantageous attribute values are different according to the genre. For example, there is a genre that is advantageous as the weight of the item is smaller, and a genre that is advantageous as the weight of the item is greater. In this case, the information set to the advantage attribute value information is different. Therefore, although the attribute field names are identical, the attribute definition information is separately registered when the advantage attribute value information is different according to the genre.

In addition to each database illustrated in Fig. 3, a genre attribute definition information DB 121 is constructed in the storage unit 12 of the online mall server 1. Fig. 11C is a diagram illustrating an example of contents registered in the genre attribute definition information DB 121. Information unique to the genre with respect to the attribute of the item is registered in the genre attribute definition information DB 121. Specifically, a genre ID, an unique attribute ID list, and an importance attribute ID list or the like are registered in the genre attribute definition information DB 121 in association with each other.

The unique attribute ID list is a list of attribute IDs of the unique fields of the genre indicated by the genre IDs. The candidate attribute ID list is a list of attribute IDs of the candidate fields of the genre indicated by the genre IDs. At which level the genre attribute definition information is registered in the genre, for example, is determined based on the common property of the unique field between genres. For example, as a genre of a level 1, there is "TV, audio, camera". Examples of the child genre of the "TV, audio, camera" include "television", "digital camera", and "audio". Also, as a child genre of the "digital camera", for example, the genre division is performed with respect to each maker of the digital camera. For example, as a genre of a level 3, there are "company X", "companyY", and "company Z" or the like. Between the television, the digital camera, and the audio, there are matched fields and there are a plurality of unmatched fields among the fields of the attributes the items have. Thus, regarding the "TV, audio, camera", the genre attribute definition information is not registered. On the other hand, each of the digital camera manufactured by company X, the digital camera manufactured by company Y, and the digital camera manufactured by company Z has a basic attribute of the digital camera. Thus, regarding the "digital camera", the genre attribute definition information is registered. On the other hand, regarding the "company X", the "company Y", and the "company Z", the genre attribute definition information is not registered. This is because it is good to use the genre attribute definition information.

Except for the description so far, the configuration of the information providing system S, and the configuration and processing contents of the online mall server 1 according to the third embodiment are basically identical to the case of the first embodiment.

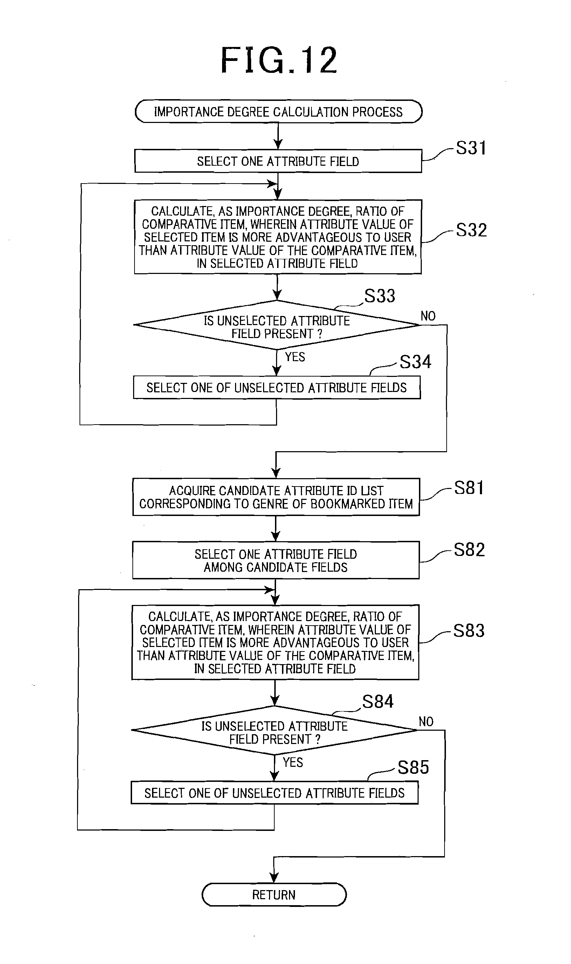

Fig. 12 is a flowchart illustrating a processing example of an importance degree calculation process of the system control unit 14 of the online mall server 1 according to the present embodiment. Also, Fig. 12 illustrates a processing example of a case where the common field is determined as the candidate field in any genre. Therefore, only the attribute ID of the unique field being the candidate field is set in the candidate attribute ID list. Also, in Fig. 12, the same reference numbers are assigned to the same processes as those of Fig. 7.

As illustrated in Fig. 12, the system control unit 14 performs steps S31 to S34 in the same manner as the case of the first embodiment. Also, in steps S31 to S34, the importance degree of the common field is calculated. In step S33, when the system control unit 14 determines that all the attribute fields are selected (step S33: NO), the system control unit 14 calculates the importance degree of the unique field.

First, the system control unit 14 acquires the candidate attribute ID list on of the genre to which the target selected item belongs, from the genre attribute definition information DB 121 (step S81). Specifically, the system control unit 14 acquires the genre ID from the item information of the target selected item. Subsequently, the system control unit 14 retrieves the genre attribute definition information including the acquired genre ID, from the genre attribute definition information DB 121. At this time, when the genre attribute definition information is not retrieved, the system control unit 14 acquires the parent genre ID from the genre information corresponding to the acquired genre ID. Therefore, the system control unit 14 retrieves the genre attribute definition information including the acquired parent genre ID, from the genre attribute definition information DB 121. At this time, when the genre attribute definition information is not retrieved, the system control unit 14 acquires a new parent genre ID, from the genre information corresponding to the genre ID, by using the acquired parent genre ID as the genre ID. In this manner, the system control unit 14 repeats the retrieval of the genre attribute definition information and the acquisition of the genre ID until the genre attribute definition information is retrieved. Then, the system control unit 14 acquires the candidate attribute ID list included in the retrieved genre attribute definition information, as the candidate attribute ID list of the genre to which the target selected item belongs. The system control unit 14 functions as a determining means to determine the candidate field by acquiring the candidate attribute ID list.

Subsequently, the system control unit 14 acquires the attribute ID from the acquired candidate attribute ID list (step S82). Subsequently, the system control unit 14 calculates the importance degree of the attribute field indicated by the acquired attribute ID (step S83). The importance degree calculation method is the same as the case of step S32. Subsequently, the system control unit 14 determines whether the attribute ID having yet not been acquired is present, from the candidate attribute ID list (step S84). At this time, when the system control unit 14 determines that the attribute ID having yet not been acquired is present (step S84: YES), the system control unit 14 acquires one of the attribute IDs having yet not been acquired (step S85). Subsequently, the system control unit 14 proceeds to step S83. The system control unit 14 calculates the importance degree of each candidate field in the genre to which the target selected item belongs, by repeating the processes of steps S83 to S85. Then, when the system control unit 14 determines that all the attribute IDs have been acquired (step S84: NO), the system control unit 14 ends the importance degree calculation process.

Also, the system control unit 14 determines whether items belong to the same genre at the level where the genre attribution definition information can be retrieved by the same processes as steps S81 in steps S6 and S13 of the one-user importance attribute field specification process illustrated in Fig. 6.

Regarding the common field, when determining whether to input to the candidate field according to the genre, the attribute ID of the attribute field being the candidate item among the common field and the unique field is set in the candidate attribute ID list. In this case, the system control unit 14 performs steps S81 to S85, without performing steps S31 to S34.

As described above, the system control unit 14 determines the candidates of the attribute fields regarded as important by the user, based on the genre to which the selected itembelongs, and specifies the attribute field regarded as important by the user, among the determined candidates. Therefore, the user can appropriately specify the attribute fields regarded as important by the user, even when the attribute fields tending to be regarded as important by the user are different according to the genre.

Also, two or more of the first to third embodiments may be combined. For example, the online mall server 1 may be configured such that the attribute values of the unique fields can be set with respect to each genre, and simultaneously, the option attribute values can be set according to the shop. Then, for example, the attribute fields where the option attribute values are set may be necessarily the candidate fields, or which option attribute value becomes the candidate fieldmay be defined in the candidate attribute ID list.

Also, in each of the above-described embodiments, the registration to the bookmark, the input to the shopping cart, and the purchase have been set as the optional action of each item. However, any one or only two of these actions may be set as the item selection action.

Also, for example, the action where the user selects the item to be displayed in the item page among the items listed in the retrieval result page may be set as the item selection action. This is because the user displays, for example, the itempage of the interesting items, based on the attribute values of the items listed in the retrieval result page. The selected item in this case is an item of which the item page is displayed by being selected from the retrieval result page. On the other hand, the comparative item in this case is an item that is not selected among items of which the information is not displayed in the retrieval result page. Also, the candidate field may be determined within the range of the attribute field of which the attribute value is displayed in the retrieval result page.

In order to specify the comparative item, for example, a browsing history DB of the retrieval result page is constructed in the storage unit 12. For example, a browsing date and time, a user ID, an item ID list, and retrieval condition information or the like are registered in the browsing history DB of the retrieval result page in association whenever the retrieval result page is browsed. The browsing date and time indicates the date and time when the retrieval result page was browsed. The user ID indicates a user who browsed the retrieval result page. The item ID list is an item ID list of an item of which the information was displayed in the retrieval result page. The retrieval condition information indicates the retrieval condition designated by the user when an item of which the information was displayed in the retrieval result page is retrieved.

In the one-user importance attribute field specification process illustrated in Fig. 6, the information for specifying the selected item is not the bookmark information but the browsing history of the item page. Also, the information for specifying the comparative item is not the browsing history of the item page but the browsing history of the retrieval result page.

Also, in each of the above-described embodiments, the transaction object according to the present invention has been applied to the item. However, the transaction objects may be applied to services. Thus, the present invention may be applied to a system capable of service reservation as the electronic commerce system. Examples of the service reservation include an accommodation reservation of an accommodation facility, a use reservation of an athletic facility such as a golf course, a seat reservation of a transport facility.

### Reference Sign List

- 1.: online mall server
- 2: shop terminal
- 3: user terminal
- 11: communication unit
- 12: storage unit
- 12a: member information DB
- 12b: genre information DB
- 12c: shop information DB
- 12d: attribute definition information DB
- 12e: item information DB
- 12f: query log DB
- 12g: browsing history DB
- 12h: shopping cart information DB
- 12i: purchase history DB
- 12j: bookmark information DB
- 12k: importance field information DB
- 121: genre attribute definition information DB
- 13: input/output interface
- 14: system control unit
- 14a: CPU
- 14b: ROM
- 14c: RAM
- 15: system bus
- NW: network
- S: information providing system

## Claims

1. An information processing apparatus comprising:
a first extracting means that extracts transaction objects whose transaction object information was browsed within a preset time, from browsing time of the transaction object information of the transaction objects registered in a list where the transaction objects selected by a user are registered, among the transaction objects whose transaction object information including attribute values of the transaction objects have been browsed to the user;
a second extracting means that extracts transaction objects that have not been registered in the list among the transaction objects extracted by the first extracting means; and
a specifying means that specifies attribute fields regarded as important by the user among a plurality of attribute fields of the transaction objects, based on attribute values differently set between transaction objects registered in the list and transaction objects extracted by the second extracting means.

2. The information processing apparatus according to claim 1,
wherein the specifying means specifies attribute fields whose attribute values more advantageous to the user are set to the transaction objects registered in the list than the transaction objects extracted by the second extracting means, as the attribute fields regarded as important by the user, among the attribute fields whose attribute values are set to both of the transaction objects registered in the list and the transaction objects extracted by the second extracting means.

3. The information processing apparatus according to claim 1,
wherein a specifying means specifies attribute fields whose attribute values are set to be advantageous to the user, as the attribute fields regarded as important by the user, among the attribute fields whose attribute values are set to only the transaction objects registered in the list among the transaction objects registered in the list and the transaction objects extracted by the second extracting means.

4. The information processing apparatus according to any one of claims 1 to 3, further comprising:
a determining means that determines candidates of the attribute fields regarded as important by the user, based on classes to which the transaction objects registered in the list belong among a plurality of classes of the transaction objects,
wherein the specifying means specifies the attribute fields regarded as important by the user, among the candidates determined by the determining means.

5. The information processing apparatus according to any one of claims 1 to 4,
wherein one of the first extracting means and the second extracting means extracts the transaction objects for which a retrieval condition stored in a browsing information storing means is the same as a retrieval condition stored in a list information storing means,
the browsing information storing means storing, in association with each other, information indicating the transaction objects whose transaction object information was browsed, and a retrieval condition designated by the user so as to retrieve the transaction objects, and
the list information storingmeans storing, in association with each other, information indicating the transaction objects registered in the list, and information designated by the user so as to retrieve the transaction objects.

6. The information processing apparatus according to any one of claims 1 to 5, further comprising:
a selecting means that selects transaction objects to be recommended to the user for transaction, based on the attribute values of the attribute fields specified by the specifyingmeans; and
a providing means that provides information on the transaction objects selected by the selecting means.

7. An information processing method, which is performed by an information processing apparatus,
the information processing method comprising:
a first extracting step of extracting transaction objects whose transaction obj ect information was browsed within a preset time, from browsing time of the transaction object information of the transaction objects registered in a list where the transaction objects selected by a user are registered, among the transaction objects whose transaction object information including attribute values of the transaction objects have been browsed to the user;
a second extracting step of extracting transaction objects that have not been registered in the list among the transaction objects extracted in the first extracting step; and
a specifying step of specifying attribute fields regarded as important by the user among a plurality of attribute fields of the transaction obj ects, based on attribute values differently set between transaction objects registered in the list and transaction objects extracted in the second extracting step.

8. An information processing program, which causes a computer included in an information processing apparatus to function as:
a first extracting means that extracts transaction obj ects whose transaction obj ect information was browsed within a preset time, from browsing time of the transaction object information of the transaction objects registered in a list where the transaction objects selected by a user are registered, among the transaction objects whose transaction object information including attribute values of the transaction objects have been browsed to the user;
a second extracting means that extracts transaction objects that have not been registered in the list among the transaction objects extracted by the first extracting means; and
a specifying means that specifies attribute fields regarded as important by the user among a plurality of attribute fields of the transaction objects, based on attribute values differently set between transaction objects registered in the list and transaction objects extracted by the second extracting means.

9. A recording medium storing thereon a computer-readable information processing program, which causes a computer included in an information processing apparatus to function as:
a first extracting means that extracts transaction objects whose transaction object information was browsed within a preset time, from browsing time of the transaction object information of the transaction objects registered in a list where the transaction objects selected by a user are registered, among the transaction obj ects whose the transaction obj ect information including attribute values of the transaction objects have been browsed to the user;
a second extracting means that extracts transaction objects that have not been registered in the list among the transaction objects extracted by the first extracting means; and
a specifying means that specifies attribute fields regarded as important by the user among a plurality of attribute fields of the transaction objects, based on attribute values differently set between transaction objects registered in the list and transaction objects extracted by the second extracting means.
